Europäisches Patentamt

European Patent Office

Office européen des brevets

(19)

(11) **EP 1 467 316 B1**

(12) **FASCICULE DE BREVET EUROPEEN**

(45) Date de publication et mention
de la délivrance du brevet:
**02.08.2006 Bulletin 2006/31**

(51) Int Cl.:
***G06T 1/00*** (2006.01)

(21) Numéro de dépôt: **04364029.1**

(22) Date de dépôt: **06.04.2004**

(54) **Tatouage adaptatif par approche vectorielle d'images en couleurs**

Adaptives Farbbild-Watermarking mittels vektoriellem Ansatz

Adaptive watermarking of colour images by vectorial approach

(84) Etats contractants désignés:
**AT BE BG CH CY CZ DE DK EE ES FI FR GB GR
HU IE IT LI LU MC NL PL PT RO SE SI SK TR**

(30) Priorité: **11.04.2003 FR 0304592**

(43) Date de publication de la demande:
**13.10.2004 Bulletin 2004/42**

(73) Titulaire: **FRANCE TELECOM
75015 Paris (FR)**

(72) Inventeurs:
• **Parisis, Alice
86360 Chasseneuil-du-Poitou (FR)**
• **Laurent, Nathalie
35630 Vignoc (FR)**
• **Carré, Philippe
86000 Poitiers (FR)**

(74) Mandataire: **Vidon, Patrice
Cabinet Vidon
16B, rue Jouanet - B.P. 90333
Technopôle Atalante
35703 Rennes Cédex 7 (FR)**

(56) Documents cités:
**US-A1- 2003 012 402**

• **CARAMMA M ET AL: "A blind & readable
watermarking technique for color images"
PROCEEDINGS 2000 INTERNATIONAL
CONFERENCE ON IMAGE PROCESSING. ICIP
2000, vol. 1, 10 septembre 2000 (2000-09-10),
pages 442-445, XP010530646 VANCOUVER,
CANADA**
• **PIVA A ET AL: "Exploiting the cross-correlation
of RGB-channels for robust watermarking of
color images" IMAGE PROCESSING, 1999. ICIP
99. PROCEEDINGS. 1999 INTERNATIONAL
CONFERENCE ON KOBE, JAPAN 24-28 OCT.
1999, PISCATAWAY, NJ, USA,IEEE, US, 24
octobre 1999 (1999-10-24), pages 306-310,
XP010369136 ISBN: 0-7803-5467-2**

Il est rappelé que: Dans un délai de neuf mois à compter de la date de publication de la mention de la délivrance du
brevet européen, toute personne peut faire opposition au brevet européen délivré, auprès de l'Office européen des
brevets. L'opposition doit être formée par écrit et motivée. Elle n'est réputée formée qu'après paiement de la taxe
d'opposition. (Art. 99(1) Convention sur le brevet européen).

## Description

Le domaine de l'invention est celui du tatouage d'images fixes en couleurs. Plus précisément, l'invention concerne une technique de tatouage permettant d'intégrer des signatures à une image, en tenant compte de la dimension couleur de cette dernière.

Le domaine du tatouage d'images, encore appelé « watermarking », est actuellement en plein essor, et fait l'objet de nombreuses recherches, tant dans le domaine des séquences vidéo que des images fixes.

On distingue actuellement deux grandes familles de tatouage d'images, correspondant respectivement au tatouage d'images en niveaux de gris et d'images couleurs.

En effet, les premières années de recherche dans le domaine du « watermarking » ont été principalement axées sur des techniques de protection des images en niveaux de gris, et ont conduit à l'utilisation de trois domaines de marquage distincts : le domaine spatial, le domaine fréquentiel et le domaine multirésolution.

Les modèles de tatouage dans le domaine spatial (où la marque est directement appliquée aux valeurs des pixels) ont l'avantage de nécessiter un faible coût en temps de calcul. Ils sont généralement robustes aux attaques géométriques (par exemple rotation et changement d'échelle). Des méthodes proposées sont la modification d'histogramme (Coltuc D. et al., *"Image authentication by exact histogram specification"* (en français "Authentification d'image par spécification d'histogramme exacte"), workshop on multimedia signal processing, Cannes, France, octobre 2001) ou encore les techniques de patchwork (D. Gruhl, W. Bender, Moritomo, *"Techniques for data hiding"* (en français, "technique de dissimulation de données"), in processing SPIE, volume 2420, page 40, février 1995).

Les modèles de tatouage dans le domaine fréquentiel ont quant à eux pour avantage d'être robustes à la compression (de type JPEG par exemple). La marque est appliquée aux coefficients résultants d'une transformation du type Fourier (comme présenté par exemple par V. Solachidis et I. Pitas, *"Self-similar ring shaped watermark embedding in 2-D DFT domain"*, 10th European Signal Processing Conference EUSIPCO'2000, Tampere, Finlande, pages 1977-1980, septembre 2000) ou Cosinus Discret (comme présenté par exemple par F. Alurki et R. Mersereau, *"A robust digital watermark procedure for still images using DCT phase modulation"*, 10th European Signal Processing Conference EUSIPCO'2000, Tampere, Finlande, pages 1961-1964, septembre 2000).

Le marquage dans le domaine multirésolution offre enfin plusieurs avantages. Il est avant tout le domaine utilisé dans les standards de compression les plus récents. Il permet également de choisir la bande fréquentielle qui porte la marque, permettant ainsi de réduire les risques de dégradation de l'image par l'application de la marque (comme illustré par D. Kundur et D. Hatzinakos, *"Digital watermarking using multiresolution wavelet decomposition"*, *Proceedings of IEEE ICASSP* '98, vol. 5, pages 2969 - 2972, Seattle, WA, USA, Mai 1998).

Outre ces techniques de tatouage des images en niveaux de gris, une deuxième grande famille de techniques de tatouage d'images fixes propose de prendre en compte la dimension couleur des images.

Au sein de cette famille, on distingue tout d'abord une première sous-famille de techniques consistant à adapter les méthodes en niveaux de gris sur les trois composantes couleur. Des paramètres sont alors utilisés pour contrôler la force de marquage sur chaque composante afin de tenir compte des propriétés du système visuel humain.

Une deuxième sous-famille regroupe des méthodes spécifiques aux images couleur. Elle tient compte du système visuel humain et utilise les caractéristiques des représentations de la couleur.

Par exemple, une méthode particulière, spécifique aux images couleurs, est celle proposée par L. Akarun, N. Özdilek, B. U. Öztekin, *"A Novel Technique for Data Hiding in Color Paletted Images"*, Proceedings of the 10th European Signal Processing Conference, EUSIPCO'00, Tampere, Finlande, pages 123-126, septembre 2000.

La première étape de cette méthode consiste à quantifier l'espace de couleurs par l'algorithme dit de 'median-cut'. Il consiste à partitionner de façon itérative l'espace de couleur avec des plans perpendiculaires aux axes des couleurs et passant par les valeurs médianes des données.

Deux cas sont alors possibles :

- toute la palette est utilisée dans la représentation de l'image, ou
- certaines valeurs de la palette ne sont pas utilisées par l'image.

Le premier cas n'est alors pas adapté à l'algorithme de marquage. Mais la palette obtenue comprend des couleurs que l'oeil humain ne peut discerner. En utilisant cette propriété on peut ainsi libérer certaines couleurs de la palette, de façon qu'elles ne soient pas utilisées dans l'image à marquée.

L'auteur propose que deux couleurs sont indiscernables si $\Delta E < 3$ avec

$$\Delta E = \sqrt{(L_1 - L_2)^2 + (a_1 - a_2)^2 + (b_1 - b_2)^2} \ ,$$

dans l'espace *Lab*. On rappelle que l'espace de représentation *Lab* est un espace perceptuellement uniforme. *L* représente la luminance et les composantes *a* et *b* sont chromatiques.

Soit *M(i)* la marque, composée de couleurs n'appartenant pas à la palette. L'auteur précise qu'une marque

**EP 1 467 316 B1**

« binaire » (composée de deux couleurs) est plus robuste (le risque d'erreur de détection est ainsi diminué).

Soit $\hat{C}$ la couleur la plus utilisée de la palette. ($\hat{C}$ est définie par le pic le plus élevé de l'histogramme couleur, chaque abscisse correspondant à une couleur de la palette.)

La marque contient un nombre d'éléments inférieur au nombre de pixels de couleur $\hat{C}$, $i<h(\hat{C})$. Chacun de ces éléments est indiscernable de la couleur $\hat{C}$.

Le marquage consiste à remplacer le $i^{\text{ème}}$ pixel de couleur $\hat{C}$ par $M(i)$.

Une autre méthode originale est celle proposée par S. Battiato, D. Catalano, G. Gallo, R. Gennaro, dans *"Robust Watermarking for Images based on Color Manipulation"*, Proceedings of the 3rd Workshop on Information hiding, LNCS 1768, pages 302-317, Dresden, 1999. Selon cette méthode, la marque n'est pas créée pour l'image au préalable, mais c'est le contenu colorimétrique de l'image qui représente la marque. Un inconvénient de cette technique est donc qu'elle est très lourde en données à conserver.

L'espace de couleur proposé par l'auteur respecte deux propriétés :

- l'espace doit être perceptuellement uniforme (comme le sont les espaces *Lab* et *Luv*) de façon à pouvoir assimiler une mesure de distance euclidienne à une différence de couleur pour le système visuel humain ;
- le passage vers cet espace, noté $LC_1C_2$, doit être rapide, simple et sans pertes d'informations.

Le domaine des couleurs opposées est défini ici à partir de RGB, de la façon suivante :

$$RGB \rightarrow LC_1C_2 :$$
$$\begin{cases} L = R + G + B; \\ C_1 = 2B - R - G; \\ C_2 = R - 2G + B. \end{cases}$$

et

$$LC_1C_2 \rightarrow RGB :$$
$$\begin{cases} R = (L + C_2 - C_1)/3; \\ G = (L - C_2)/3 \\ B = (C_1 + L)/3. \end{cases}$$

D'après les auteurs, cet espace se rapproche le plus de la représentation des canaux chromatiques du système visuel humain.

Le marquage est réalisé de la façon suivante. La marque est un vecteur $M(n)$, $n=1,...,k,...,N$ où $N$ est le nombre de couleurs de l'image et $k$ l'indice d'une couleur de l'image. Soit $(LC_1C_2)_k$ la couleur associée à l'indice $k$, représentée par un vecteur dans l'espace $LC_1C_2$. On sélectionne un rayon dans une sphère définie autour du point de coordonnée $(LC_1C_2)_k$ de façon aléatoire. Pour chaque pixel $(x,y)$ correspondant à la couleur $k$, le vecteur correspondant au rayon (déterminé précédemment) est ajouté au vecteur de couleur initial pour obtenir le vecteur marqué $(LC_1C_2)_k'$.

Chaque couleur est ainsi marquée par addition d'un même vecteur. L'image marquée est reconstruite en remplaçant les couleurs originales par les couleurs marquées, en respectant les coordonnées des pixels de l'image.

La marque est alors constituée de l'ensemble des couleurs de l'image originale.

La détection est réalisés par comparaison de l'image marquée avec les marques générées sur l'ensemble des images traitées. Elle s'effectue de la façon suivante. Il faut d'abord considérer que l'image sur laquelle la détection est effectuée possède le même nombre de couleurs que l'image originale. L'algorithme de détection compare l'image à chacune des marques enregistrées. Couleur par couleur, on va chercher la marque la plus proche (où les vecteurs différences entre les deux pixels de même coordonnée sont les plus semblables). La marque correspondant à l'image marquée est celle ayant le plus grand nombre de vecteurs de différence entre les couleurs de l'image marquée et de l'image originale en commun.

On notera que les différentes publications relatives aux techniques de tatouage couleur sont généralement consacrées à l'intégrité de l'aspect visuel et la robustesse de ces techniques contre les attaques classiques est peu développée.

Généralement, pour des méthodes dont l'algorithme de base peut être appliqué aux images en niveaux de gris, le marquage suit la technique suivante :

- passage dans l'espace transformée (coefficients d'ondelettes, coefficients de cosinus discret, etc.)
- application de la formule suivante :

$$I_W^{'}(i,j) = I'(i,j) + \alpha(i,j)M(i,j)$$

où $I'_w$ représente la transformée de l'image (ou la composante) marquée, $I'$ la transformée de l'image (ou la composante) originale, $M$ la marque, $\alpha$ le facteur de contrôle d'intensité de marquage, et où $i$ et $j$ représentent les coordonnées du pixel traité.

Les algorithmes basés sur les caractéristiques des composantes couleur sont plus adaptés aux caractéristiques du système visuel humain. Le premier article de Kutter M., Jordan F. et Bossen F, (*"Digital Signature of Color Images using Amplitude Modulation"*, Processings of SPIE storage and retrieval for image and video databases, San Jose, USA, volume 3022, numéro 5, pages 518-526, Février 1997) sur le « watermarking » couleur proposait de travailler sur la composante bleue du système RGB, pour laquelle l'oeil humain était le moins sensible.

Cette idée a été reprise par A. Reed et B. Hannigan, dans *"Adaptive Color Watermarking"*, Proceedings of SPIE, Electronic Imaging, volume 4675, janvier 2002. Ces auteurs proposent de travailler sur la composante jaune du système CMY (« Cyan Magenta Yellow » pour « Cyan Magenta Jaune », qui est un espace colorimétrique), car ils considèrent que l'oeil humain est moins sensible aux variations de couleur sur l'axe jaune-bleu.

De façon générale, la composante bleue permet de mieux dissimuler la marque (mais avec une robustesse moindre) et la composante verte permet de mieux protéger la marque contre des attaques (mais avec des dégradations plus visibles de l'image). Cela s'explique par le fait que le système visuel humain est plus sensible aux variations dans le vert qu'aux variations dans le bleu. Le compromis entre invisibilité et robustesse de la marque dépend donc de la nature colorimétrique de la composante.

Enfin, une dernière technique, proposée par J.J. Chae, D. Mukherjee, et B.S. Manjunath, dans *"Color Image Embedding using Multidimensional Lattice Structures"*, Proceeding of IEEE International Conference on Image Processing, Chicago, Illinois, volume 1 , pages 460-464, octobre 1998, repose sur une approche du type vectorielle.

Selon cette technique, la première étape du marquage consiste à faire une décomposition en ondelettes de l'image initiale et de la signature (qui peut aussi être une image). Un seul niveau de décomposition est effectué. On obtient ainsi les coefficients en ondelettes de l'image originale, notés $(C_Y, C_U, C_V)(x,y)$, dont chaque composante correspond à la composante couleur de l'espace YUV, et les coefficients en ondelettes de la marque. L'utilisation de l'espace YUV (espace utilisé en vidéo : Y est la composante de luminance, U et V sont des composantes chromatiques) permet ainsi une adaptation directe de cette technique aux documents vidéo.

Les coefficients d'ondelettes résultant de la décomposition de la marque sont quantifiés en $\beta$ niveaux. On obtient ainsi un vecteur $\vec{M}$ , $(M_Y, M_U, M_V)(x,y)$ pour une marque en couleur et $M(x, y)$ pour une marque en niveaux de gris, contenant $(s_i)$ éléments où $1 < i < \beta$.

L'intégration de la marque peut s'écrire sous la forme :

$$(C_Y, C_U, C_V)_i'(x,y) = (C_Y, C_U, C_V)_i(x,y) + \alpha\vec{M}(s_i)$$

où $\alpha$ est le facteur de contrôle de la force de marquage.

La détection de la marque est ensuite effectuée de la façon suivante. Après l'application de la transformée en ondelettes sur l'image marquée, les coefficients résultants sont quantifiés en $\beta$ niveaux.

Pour estimer le vecteur le plus proche de celui utilisé en tant que marque, on recherche la valeur de quantification du coefficient le plus proche de ceux de l'image initiale (la marque est alors détectée, élément par élément).

L'image correspondant à la marque détectée pourra ainsi être reconstruite par transformée en ondelettes inverse.

Toutes les techniques de tatouage d'images en niveaux de gris ou d'images couleurs décrites ci-dessus présentent de nombreux inconvénients.

Ainsi, les techniques de « watermarking » des images couleur basées sur des algorithmes en niveaux de gris ne permettent pas la prise en compte de la dimension couleur des images. De ce fait, elles ne permettent pas d'optimiser le compromis entre invisibilité et robustesse de la marque.

Les techniques de tatouage des images couleur sont quant à elles très complexes et cherchent toutes à répondre à un objectif d'invisibilité de la marque. En d'autres termes, elles ne sont pas suffisamment robustes vis-à-vis des attaques classiques de type compression ou filtrage.

La technique proposée par Chae et al. décrite ci-dessus, bien qu'utilisant une approche vectorielle, présente quant à elle pour inconvénient de ne pas être robuste à la compression. En outre, cette méthode de marquage ne permet pas d'envisager la sécurisation de documents. Enfin, cette technique ne tient pas compte de la dimension couleur de l'image, puisqu'elle affecte la même force de marquage aux trois composantes de couleur de l'image.

Enfin, aucune technique de l'art antérieur utilisant une décomposition en ondelettes n'offre un marquage aveugle, qui permette une détection de la marque ne nécessitant pas l'image originale. Par ailleurs, aucune de ces techniques n'offre une robustesse contre la compression JPEG, le filtrage médian et l'ajout de bruit.

M. Caramma et al.: "A blind & readable watermarking technique for color images", Proceedings of the International Conference on Image Processing ICIP, 10.09.2000, vol. 1, p. 442 - 445, Vancouver, Canada, révèle une méthode d'insertion d'un filigrane dans l'espace d'ondelettes utilisant 4 niveaux de résolution et prenant compte du système visuel humain s'agissant de la force du filigrane. Les trois composantes d'une image en couleurs sont traitées différemment, mais des filigranes de force diverse sont insérés dans les trois composantes.

L'invention a notamment pour objectif de pallier ces inconvénients de l'art antérieur.

Plus précisément, un objectif de l'invention est de fournir une technique de tatouage d'images couleur permettant d'intégrer une ou plusieurs signatures à une image couleur.

En d'autres termes, un objectif de l'invention est de fournir une technique de sécurisation de documents par insertion invisible d'une marque.

Un autre objectif de l'invention est de mettre en oeuvre une telle technique qui soit robuste à la plupart des attaques. Notamment, un objectif de l'invention est de fournir une telle technique qui soit robuste à la compression (notamment de type JPEG), au filtrage (notamment par un filtre médian) et à l'ajout de bruit.

L'invention a encore pour objectif de mettre en oeuvre une telle technique qui permette une détection aveugle, c'est-à-dire ne nécessitant pas l'image originale, de la marque dans une image.

Encore un objectif de l'invention est de fournir une telle technique permettant de réduire la visibilité de la marque par rapport aux techniques de l'art antérieur.

Ces objectifs, ainsi que d'autres qui apparaîtront par la suite, sont atteints à l'aide d'un procédé de tatouage d'une image en couleurs, présentant trois composantes.

Selon l'invention, un tel procédé comprend une étape d'insertion d'une marque de tatouage, en au moins un point de l'image, selon une règle d'insertion

prenant en compte la position relative de trois vecteurs de composante, pour chacune desdites composantes respectivement, associés audit au moins un point.

Ainsi, l'invention repose sur une approche tout à fait nouvelle et inventive du tatouage d'images couleur. En effet, l'invention repose sur une approche vectorielle, permettant, par rapport aux techniques de l'art antérieur, de prendre en compte la dimension couleur de l'image.

La marque de tatouage n'est donc plus, contrairement aux techniques de l'art antérieur, appliquée de façon identique sur les trois composantes couleur de l'image ; en d'autres termes, alors que, selon l'art antérieur, on procédait à un marquage indépendant des trois vecteurs de composante de l'image, selon l'invention, ces trois vecteurs sont désormais pris en compte « en synergie » pour l'insertion de la marque.

La mise en oeuvre d'une approche vectorielle permet, en termes de robustesse, d'obtenir des réponses plus stables que les techniques de l'art antérieur dans le domaine des ondelettes, telles que celle de Kundur et al. citée ci-dessus, comme technique de tatouage dans le domaine des ondelettes. Une telle approche vectorielle permet également de minimiser les variations induites par la marque dans le domaine couleur, et améliore donc sensiblement l'invisibilité de la marque par rapport aux techniques de l'art antérieur.

Avantageusement, on sélectionne, pour chacun desdits points concernés, deux vecteurs en tant que vecteurs de référence et un vecteur à marquer pour porter ladite marque de tatouage.

On notera que l'invention consiste donc, contrairement à l'art antérieur, à marquer des vecteurs de composante (i.e. des vecteurs couleurs par exemple), et non de simples coefficients de l'image.

Préférentiellement, ledit vecteur à marquer est le vecteur central, se trouvant entre lesdits vecteurs de référence.

De manière avantageuse, on calcule les distances deux à deux entre lesdits trois vecteurs, lesdits vecteurs de référence étant ceux les plus distants l'un de l'autre.

De manière préférentielle, on détermine une frontière entre lesdits vecteurs de référence, définissant deux zones associées respectivement aux valeurs binaires « 0 » et « 1 ».

On crée ainsi deux demi-espaces, associés respectivement à chacun desdits vecteurs de référence, et correspondant à une valeur « 0 » ou « 1 » de la marque que l'on souhaite insérer.

Avantageusement, ladite frontière est définie par la bissectrice entre lesdits vecteurs de référence.

Selon une caractéristique avantageuse de l'invention, le marquage dudit vecteur à marquer comprend un déplacement éventuel dudit vecteur à marquer dans l'une desdites zones, selon la valeur binaire de marquage à appliquer.

Ainsi, si l'on souhaite insérer sur le vecteur à marquer une marque de valeur « 0 » et que le vecteur à marquer se trouve dans la zone ou le demi-espace associé à la valeur binaire « 1 », on déplace son extrémité de façon qu'elle se trouve dans l'autre demi-espace, ou zone, associés à la valeur « 0 ».

Si l'on souhaite insérer sur le vecteur à marquer une marque de valeur « 0 » et que le vecteur à marquer se trouve déjà dans la zone associée à la valeur binaire « 0 », on peut également déplacer son extrémité de façon à se rapprocher du vecteur de référence se situant dans ce demi-espace, de façon à augmenter la robustesse de la marque (tout en restant bien entendu dans le demi-espace associé à la valeur binaire « 0 »).

Selon une autre caractéristique avantageuse de l'invention, ledit déplacement a une amplitude variable, fonction d'une force de marquage choisie en fonction d'au moins une caractéristique locale de ladite image.

Ainsi, en fonction des caractéristiques colorimétriques ou des caractéristiques de texture locales de l'image, on peut choisir d'insérer une marque plus ou moins visible et plus ou moins robuste, en fonction de la force de marquage choisie. Une telle force de marquage peut prendre par exemple une valeur comprise entre 0 et 1, une force nulle correspondant à une marque peu robuste et invisible, une force égale à 1 correspondant à une marque robuste mais visible.

Selon une variante avantageuse de l'invention, un tel procédé de tatouage comprend également une étape de transformation en ondelettes de chacune desdites composantes de l'image, et lesdits trois vecteurs de composantes sont déterminés, pour chaque point d'au moins un niveau de décomposition de ladite transformation en ondelettes, pour chacune desdites composantes respectivement.

L'invention combine donc à l'approche vectorielle une décomposition en ondelettes de l'image. L'utilisation d'une telle transformée en ondelettes permet avantageusement à la technique de l'invention d'être plus robuste vis-à-vis d'attaques du type compression JPEG, filtrage médian et ajout de bruit.

On notera que par « point », on entend ici une position pixélique dans un niveau de décomposition de l'image, ainsi qu'illustré par la figure 10, qui représente une image échelle E 101, et les trois images de détail $D_N^{1,R}$ 102, $D_N^{2,R}$ 103, $D_N^{3,R}$ 104 pour la composante rouge d'une décomposition en ondelettes dans un système RGB. Le « point » 105 est défini par une même position pixélique dans chacune des trois images de détail référencées 102 à 104.

Préférentiellement, on prévoit au moins deux conventions de marquage d'un vecteur.

Selon une caractéristique avantageuse de l'invention, on choisit comme convention de marquage pour une image donnée celle limitant les risques de conflit lors de la détection de ladite marque.

Préférentiellement, on choisit une desdites conventions en fonction des nombres de vecteurs de référence présent dans ladite image pour chacune desdites composantes.

Ainsi, dans un système de type RGB par exemple, on détermine le nombre de fois où les vecteurs rouge, vert et bleu sont choisis comme vecteurs de référence ou comme vecteur à marquer, et on en déduit la convention de marquage permettant de réduire au maximum les risques de conflit lors de la détection de la marque. Par exemple, on choisit une convention de marquage telle que le vecteur le moins souvent marqué soit situé dans la zone de conflit.

De manière préférentielle, ledit marquage est, au moins <u>en l'absence de conflit,</u> calculé selon l'équation suivante :

$$\vec{V}_{M,W}(x,y) = \vec{V}_R(x,y) - (1 - F_M)(\vec{V}_R(x,y) - \vec{V}_M(x,y))$$

où $\vec{V}_M(x,y)$ est ledit vecteur à marquer, $\vec{V}_R(x,y)$ est un desdits vecteurs de référence, $F_M$ est ladite force de marquage et $\vec{V}_{M,W}(x,y)$ est ledit vecteur marqué.

Préférentiellement, en cas de conflit, ledit marquage est calculé selon l'équation suivante :

$$\vec{V}_{M,W}(x,y) = \vec{V}_R(x,y) - beta.(1 - F_M)(\vec{V}_R(x,y) - \vec{V}_M(x,y)),$$

où *beta<1.*

Avantageusement, un tel procédé de tatouage comprend, après ladite étape d'association d'une marque de tatouage, une étape de transformation en ondelettes inverse, délivrant une image marquée.

Ainsi, après avoir procédé à une transformation en ondelettes des différentes composantes couleur de l'image, et après avoir inséré la marque de tatouage sur les vecteurs couleurs, on reconstruit une image marquée, par transformation en ondelettes inverse.

De façon avantageuse, ladite marque est une signature binaire pseudo-aléatoire écrite de façon redondante.

La redondance de l'insertion de la marque permet une meilleure protection de l'image et une plus forte probabilité de détection du tatouage.

Préférentiellement, lesdites composantes appartiennent au groupe comprenant :

- les composantes RGB ;
- les composantes YUV ;
- les composantes CMY.

Plus généralement, tous les espaces de représentation de la couleur peuvent être utilisés, qu'il s'agisse d'espaces définis par la CIE (Commission Eclairage Internationale) ou d'espaces originaux.

L'invention concerne aussi un dispositif de tatouage d'une image en couleurs, présentant trois composantes, et comprenant des moyens d'insertion d'une marque de tatouage, en au moins un point de l'image, selon une règle d'insertion prenant en compte la position relative de trois vecteurs de composante, pour chacune desdites composantes respectivement, associés audit au moins un point.

L'invention concerne également un programme d'ordinateur comprenant des instructions de code de programme enregistré sur un support utilisable dans un ordinateur pour le tatouage d'une image en couleurs, présentant trois composantes. Selon l'invention, ledit programme comprend des moyens de programmation lisibles par ordinateur pour effectuer une étape d'insertion d'une marque de tatouage, en au moins un point de l'image, selon une règle d'insertion prenant en compte la position relative de trois vecteurs de composante, pour chacune desdites composantes respectivement, associés audit au moins un point.

L'invention concerne encore une image en couleurs présentant trois composantes et comprenant un tatouage obtenu par insertion d'une marque de tatouage, en au moins un point de l'image, selon une règle d'insertion prenant en compte la position relative de trois vecteurs de composante, pour chacune desdites composantes respectivement, associés audit au moins un point.

L'invention concerne aussi un procédé de détection d'un tatouage dans une image tatouée, réalisé selon le procédé de tatouage décrit précédemment. Selon l'invention, un tel procédé de détection comprend une étape de récupération d'une marque de tatouage, en au moins un point de l'image, selon une règle de récupération prenant en compte la position relative de trois vecteurs de composante, pour chacune desdites composantes respectivement, associés audit au moins un point.

Préférentiellement, ladite étape de récupération comprend une sous-étape de calcul des distances deux à deux entre lesdits trois vecteurs, et les deux vecteurs les plus distants l'un de l'autre sont des vecteurs de référence, le troisième vecteur étant le vecteur marqué portant ladite marque de tatouage.

Avantageusement, une frontière entre lesdits vecteurs de référence définissant deux zones associées respectivement aux valeurs binaires « 0 » et « 1 », ladite étape de récupération comprend également une sous-étape de repérage de la zone dans laquelle se situe ledit vecteur marqué, et une étape d'association d'une valeur binaire correspondante.

De façon avantageuse, ladite marque est récupérée au moins deux fois, et on met en oeuvre un calcul de corrélation par rapport à une signature de référence, afin de décider si le tatouage est ou non correctement détecté.

L'invention concerne encore un dispositif de détection d'un tatouage dans une image tatouée, réalisé selon le procédé de tatouage décrit précédemment. Selon l'invention un tel dispositif comprend des moyens de récupération d'une marque de tatouage, en au moins un point de l'image, selon une règle de récupération prenant en compte la position relative de trois vecteurs de composante, pour chacune desdites composantes respectivement, associés audit au moins un point.

L'invention concerne enfin un programme d'ordinateur comprenant des instructions de code de programme enregistré sur un support utilisable dans un ordinateur pour la détection d'un tatouage dans une image tatouée, réalisé selon le procédé décrit précédemment. Un tel programme comprend des moyens de programmation lisibles par ordinateur pour effectuer une étape de récupération d'une marque de tatouage, en au moins un point de l'image, selon une règle de récupération prenant en compte la position relative de trois vecteurs de composante, pour chacune desdites composantes respectivement, associés audit au moins un point.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique du principe d'analyse multi-résolution d'une image I par transformation ondelettes, mis en oeuvre selon l'invention ;
- la figure 2 illustre le principe d'obtention d'images au niveau de résolution j à partir de l'image échelle au niveau j+1 par transformation ondelettes, selon le principe de la figure 1 ;

- la figure 3 décrit une arborescence de coefficients ondelettes construite à l'issue de la transformation ondelettes de la figure 2 ;
- la figure 4 illustre la génération d'une marque par redondance de la signature ;
- la figure 5 présente l'étape de construction des vecteurs de référence et du vecteur de marquage ;
- les figures 6a à 6c illustrent les différentes conventions de marquage mises en oeuvre selon l'invention ;
- la figure 7 illustre un cas de figure possible de positionnement des vecteurs originaux, ainsi que les deux déplacements du vecteur à marquer envisageables pour ce cas ;
- les figures 8a et 8b présentent respectivement un exemple d'image originale et d'image correspondante marquée selon la technique de tatouage de l'invention ;
- les figures 9a à 9c présentent, sous forme de graphes, les résultats de tests de robustesse de la technique de tatouage de l'invention, sur l'exemple de l'image de la figure 8b ;
- la figure 10 précise la notion de « point » d'une image, qui représente, dans le cadre d'une transformation en ondelettes, une position pixélique dans un niveau de décomposition.

Le principe général de l'invention repose sur la prise en compte de la dimension couleur des images, et propose une approche vectorielle du tatouage. L'invention permet ainsi un marquage vectoriel prenant en compte, en synergie, les trois vecteurs couleur de l'image.

Dans un mode de réalisation particulier de l'invention, qui sera décrit dans toute la suite du document, on combine à cette approche vectorielle une décomposition en ondelettes des composantes couleur de l'image.

Dans ce mode de réalisation particulier, l'invention consiste donc à insérer une marque dans une image couleur en réalisant les étapes suivantes :

- Transformation de chaque composante de l'image couleur dans le domaine des ondelettes,
- Génération indépendante de la marque de façon pseudo-aléatoire à partir d'une clé,
- Définition de l'ensemble des vecteurs couleurs
- Pour chaque coordonnée des composantes passe-bande:

    o Définition de 2 vecteurs de référence et d'un vecteur qui portera la marque (les vecteurs de référence sont les vecteurs les plus distants, la marque est ainsi appliquée sur le vecteur « central » ce qui minimise l'impact visuel)
    o Définition d'une règle qui gère la force de la marque et détermine l'espace d'insertion associé au bit 1 et au bit 0.

- Reconstruction de l'image couleur marquée par transformée en ondelettes, en tenant compte des modifications par marquage des coefficients d'ondelettes.

Ces différentes opérations sont détaillées plus en détail dans la suite, en relation avec les figures.

## 1. Transformation ondelette

La première étape mise en oeuvre selon l'invention est une étape de transformation en ondelettes. On rappelle que la transformation ondelette est un outil mathématique puissant permettant l'analyse multi-résolution d'une fonction, ainsi que décrit par Mallat S. (dans "*A Theory for Multiresolution Signal Decomposition: the Wavelet Representation*", IEEE Transactions on Pattern Analysis and Machine Intelligence, Vol. 11, No. 7, Juillet 1989, pp. 674-693), par Stollnitz E.J., DeRose T.D., et Salesin D. (dans *"Wavelets for Computer Graphics: A Primer-Part 1"*, IEEE Computer Graphics and Applications, Mai 1995, pp.76-84 ou encore dans *"Wavelets for Computer Graphics: A Primer-Part 2"*, IEEE Computer Graphics and Applications, Juillet 1995, pp.75-85).

L'annexe 1, qui fait partie intégrante de la présente demande de brevet, rappelle les aspects essentiels de la théorie des ondelettes.

Dans le cadre de l'invention, les fonctions considérées sont des images numériques, c'est-à-dire des fonctions bi-dimensionnelles discrètes. Sans perte de généralités, on suppose que les images traitées sont échantillonnées sur une grille discrète de n lignes et m colonnes et à valeur dans un espace de luminance échantillonné à 256 valeurs. De plus, on suppose que $n = 2^k$ $(k \in Z)$ et que $m = 2^l$ $(l \in Z)$.

Si on note I l'image originale, on a alors :

$$I : \begin{vmatrix} [0,m] \times [0,n] \to [0,255] \\ (x,y) \mapsto I(x,y) \end{vmatrix}.$$

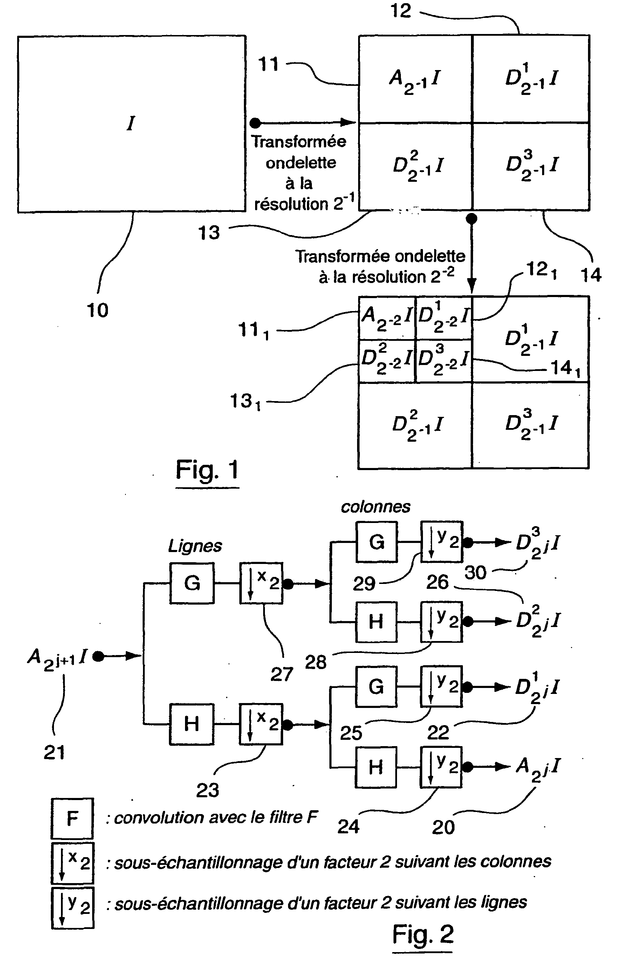

La transformation ondelette de l'image I 10 permet une représentation multi-résolution de I, ainsi qu'illustré par la figure 1. A chaque niveau de résolution $2^j (j \leq -1)$, la représentation de I 10 est donnée par une image grossière $A_{2^j}I$ 11 et par trois images de détails $D_{2^j}^1 I$ 12, $D_{2^j}^2 I$ 13 et $D_{2^j}^3 I$ 14. Chacune de ces images est de taille $2^{k+j} \times 2^{l+j}$.

A nouveau, au niveau de résolution suivant, l'image grossière $A_{2^j} I$ 11 peut être représentée par une image grossière $A_{2^j}{-1} I$ $11_1$ et par trois images de détails $D_{2^{j-1}}^1 I$ $12_1$, $D_{2^{j-1}}^2 I$ $13_1$ et $D_{2^{j-1}}^3 I$ $14_1$.

La transformation ondelette nécessite le choix d'une fonction échelle $\Phi(x)$ ainsi que le choix d'une fonction ondelette $\Psi(x)$. A partir de ces deux fonctions, on dérive un filtre échelle H et un filtre ondelette G dont les réponses impulsionnelles respectives h et g sont définies par :

$$h(n) = \langle \phi_{2^{-1}}(u), \phi(u-n) \rangle \forall n \in Z$$

$$g(n) = \langle \psi_{2^{-1}}(u), \phi(u-n) \rangle \forall n \in Z.$$

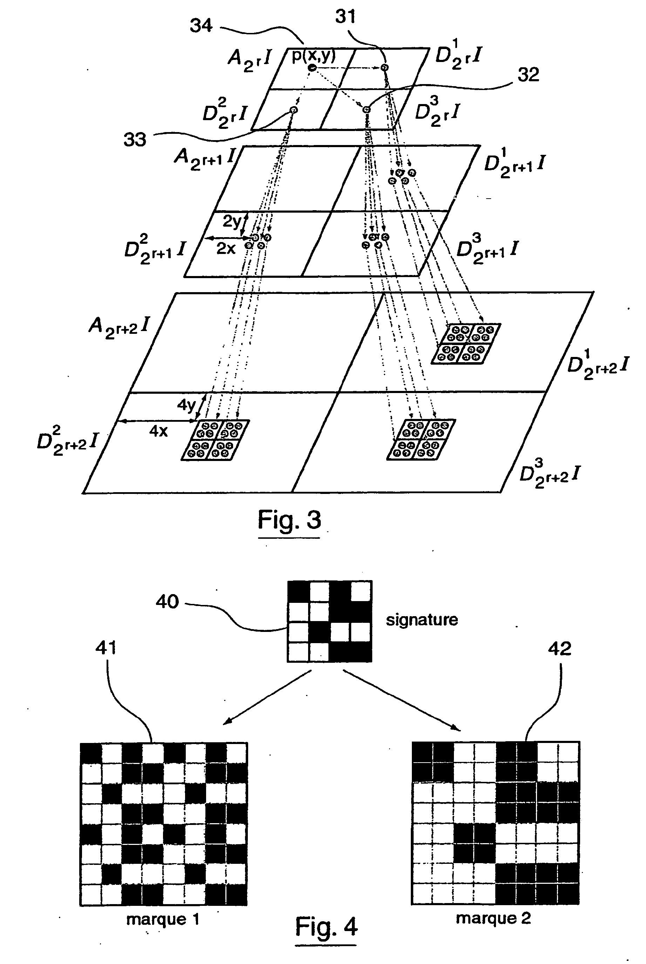

Notons respectivement $\widetilde{H}$ et $\widetilde{G}$ les filtres miroirs de H et G (i.e. $\widetilde{h}(n) = h(-n)$ et $\widetilde{g}(n) = g(-n)$).
On peut alors montrer, comme illustré par la figure 2, que :

❖ $A_{2^j}I$ 20 peut être calculée en convoluant $A_{2^{j+1}}I$ 21 avec $\widetilde{H}$ dans les deux dimensions et en sous-échantillonnant d'un facteur deux (23, 24) dans les deux dimensions ;

❖ $D_{2^j}^1 I$ 22 peut être calculée en :

    1. convoluant $A_{2^{j+1}}I$ 21 avec $\widetilde{H}$ suivant la direction y et en sous-échantillonnant d'un facteur deux (23) suivant cette même direction ;
    2. convoluant le résultat de l'étape 1) avec $\widetilde{G}$ suivant la direction x et en sous-échantillonnant d'un facteur deux (25) suivant cette même direction.

❖ $D_{2^j}^2 I$ 26 peut être calculée en :

    1. convoluant $A_{2^{j+1}} I$ 21 avec $\widetilde{G}$ suivant la direction y et en sous-échantillonnant d'un facteur deux (27) suivant cette même direction ;
    2. convoluant le résultat de l'étape 1) avec $\widetilde{H}$ suivant la direction x et en sous-échantillonnant d'un facteur deux (28) suivant cette même direction.

❖ $D_{2^j}^3 I$ 30 peut être calculée en :

    1. convoluant $A_{2^{j+1}} I$ 21 avec $\widetilde{G}$ suivant la direction y et en sous-échantillonnant d'un facteur deux (27) suivant cette même direction ;
    2. convoluant le résultat de l'étape 1) avec $\widetilde{G}$ suivant la direction x et en sous-échantillonnant d'un facteur deux (29) suivant cette même direction.

Dans un mode de réalisation particulier de l'invention, on utilise la base de Daubechies, et on choisit le niveau de résolution $2^r$ ($r \leq -1$) avec r=-4.

Les ondelettes de Daubechies ont un support de taille minimale pour un nombre donné de moments nuls. Les ondelettes de Daubechies à support compact se calculent à partir de filtres miroirs conjugués h de réponse impulsionnelle finie. De la longueur du filtre dépend le support temporel de l'ondelette associée ainsi que le nombre de moments nuls. Il n'existe pas de formule explicite pour les filtres de Daubechies quel que soit l'ordre du filtre. Les filtres se construisent à partir de la résolution du problème suivant :

Soit le polynôme trigonométrique $\hat{h}(w) = \sum_{n=0}^{N-1} h[n]e^{-inw}$ transformée de Fourier du filtre de Daubechies, alors il faut construire un polynôme $R(e^{-iw})$ de degré minimal tel que $\hat{h}(w) = \sqrt{2}\left(\dfrac{1+e^{-iw}}{2}\right)^{P} R(e^{-iw})$ et $|\hat{h}(w)|^2 + |\hat{h}(w$

$+\pi)|^2 = 2$. Selon l'invention, on choisit de préférence le filtre à huit coefficients qui correspond au polynôme suivant :

$$\hat{h}(w) = 0,2304 + 0,7148\,e^{-iw} + 0,6309\,e^{-i2w} - 0,028\,e^{-i3w} - 0,187\,e^{-i4w}$$
$$+ 0,0308\,e^{-i5w} + 0,0329\,e^{-i6w} - 0,0106\,e^{-i7w}$$

La figure 3 illustre la construction, après que la transformation ondelettes est effectuée jusqu'à un niveau de résolution minimal $2^r$ ($r \leq -1$), d'une arborescence des coefficients ondelettes :

- Chaque pixel $p(x,y)$ référencé 34 de l'image $A_2, I$ est la racine d'un arbre ;
- Chaque racine $p(x,y)$ se voit attribuer trois noeuds fils référencés 31 à 33 désignés par les coefficients ondelettes des trois images de détails $D_{2^r}^s I$ (s=1,2,3) localisés au même emplacement $(x,y)$;
- Du fait du sous-échantillonnage d'un facteur deux effectué par la transformation ondelette à chaque changement de résolution (voir figure 2), chaque coefficient ondelette $D_{2^r}^s$ $(x, y)$ (s=1,2,3) correspond à une zone de taille $2 \times 2$ pixels dans l'image détail correspondante à la résolution $2^{r+1}$. Cette zone est localisée en $(2x,2y)$ et tous les coefficients ondelettes y appartenant deviennent les noeuds fils de $D_{2^r}^s$ $(x, y)$.

De façon récursive, on construit ainsi l'arborescence dans laquelle chaque coefficient ondelette $D_{2^u}^s$ $(x, y)$ (s=1,2,3 et 0>u>r) possède quatre noeuds fils désignés par les coefficients ondelettes de l'image $D_{2^{u+1}}^s I$ localisés dans la région située en $(2x,2y)$ et de taille $2 \times 2$ pixels.

Une fois l'arborescence construite, chaque coefficient ondelette $D_{2^r}^s (x,y)$ (s=1,2, 3) correspond à une région de taille $2^{-r} \times 2^{-r}$ pixels dans l'image détail $D_{2^{-1}}^s I$.

**2. Construction de la marque**

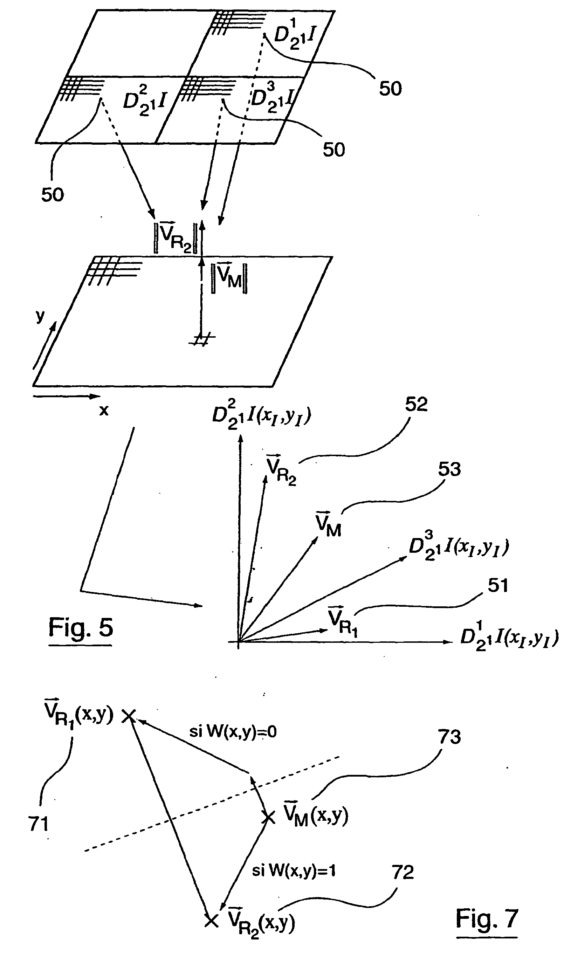

Une signature binaire S de $N_B$ bits est générée de façon pseudo-aléatoire, contrôlée par une clef K. Cette signature, écrite sous forme d'une matrice $\sqrt{N_B} * \sqrt{N_B}$ est ensuite écrite de façon redondante pour obtenir la marque W. La redondance peut-être effectué bit par bit ou signature par signature, ainsi qu'illustré par la figure 4.

Dans un mode de réalisation particulier de l'invention, la signature S 40 est une signature binaire de 16 bits et est générée de façon pseudo-aléatoire à l'aide d'une clef $K=9$. Cette signature matricielle (4*4) 40 est ensuite recopiée O fois pour créer une marque, comme dans le premier exemple 41 présentée dans la figure 4. Pour une image de taille 256*256, sachant que les coefficients d'ondelettes utilisées sont ceux définis pour la 4$^{ème}$ échelle de décomposition, la marque sera de taille 16*16. La signature est donc répétée 16 fois.

On notera que sur la figure 4, les carrés noirs illustrent un bit à 1 et les carrés blancs représentent un bit à 0.

**3. Insertion de la marque**

*3.1 Définition des vecteurs*

Les vecteurs sont définis à partir de la décomposition en ondelettes à l'échelle -r, pour chaque coordonnées (x,y) des trois images de détails $D_{2^r}^1 I$ 22, $D_{2^r}^2 I$ 26, $D_{2^r}^3 I$ 30, et pour chacune des trois composantes couleur notées I={A, B, C}.

A, B et C sont des composantes qui dépendent de l'espace de représentation (ABC peut être RGB, XYZ, YUV, etc.).

On obtient ainsi, pour chaque coordonnées (x,y) 50 des images de détails, les trois vecteurs suivants, illustrés par la figure 5 :

$$\vec{V}_A(x,y) = \{D_{2^r}^1 A(x,y), D_{2^r}^2 A(x,y), D_{2^r}^3 A(x,y)\},$$

$$\vec{V}_B(x,y) = \{D_{2^r}^1 B(x,y), D_{2^r}^2 B(x,y), D_{2^r}^3 B(x,y)\},$$

$$\vec{V}_C(x,y) = \{D_{2^r}^1 C(x,y), D_{2^r}^2 C(x,y), D_{2^r}^3 C(x,y)\}$$

Dans un mode de réalisation particulier de l'invention, on considère l'image dans l'espace de représentation RGB, et les vecteurs sont définis pour chaque composante (R,G et B) à partir des coefficients d'ondelettes de la 4$^{ème}$ échelle de décomposition (*r*=4):

$$\vec{V}_R(x,y) = \{D_{2^4}^1 R(x,y), D_{2^4}^2 R(x,y), D_{2^4}^3 R(x,y)\},$$

$$\vec{V}_G(x,y) = \{D_{2^4}^1 G(x,y), D_{2^4}^2 G(x,y), D_{2^4}^3 G(x,y)\},$$

$$\vec{V}_B(x,y) = \{D_{2^4}^1 B(x,y), D_{2^4}^2 B(x,y), D_{2^4}^3 B(x,y)\}$$

*3.2 Calcul des distances, vecteurs de référence et vecteur marqué*

Pour chaque coordonnée des images détails, les distances entre vecteurs deux à deux sont calculées :

$$D_{A,B}(x,y) = \left| \vec{V}_A(x,y) - \vec{V}_B(x,y) \right|$$

$$D_{A,C}(x,y) = \left| \vec{V}_A(x,y) - \vec{V}_C(x,y) \right|$$

$$D_{B,C}(x,y) = \left| \vec{V}_B(x,y) - \vec{V}_C(x,y) \right|$$

La distance la plus grande est définie par les deux vecteurs de référence $\vec{V}_{R_1}$ 51 et $\vec{V}_{R_2}$ 52 (voir figure 5). Ce sera le troisième vecteur 53 qui sera marqué.

Ainsi, si $D_{A,B}(x,y) > D_{A,C}(x,y)$ et $D_{A,B}(x,y) > D_{B,C}(x,y)$, alors $\vec{V}_A(x,y)$ et $\vec{V}_B(x,y)$ sont les vecteurs de référence et $\vec{V}_C(x,y)$ est le vecteur qui portera la marque.

Si $D_{A,C}(x,y) > D_{A,B}(x,y)$ et $D_{A,C}(x,y) > D_{B,C}(x,y)$, alors $\vec{V}_A(x,y)$ et $\vec{V}_C(x,y)$ sont les vecteurs de référence et $\vec{V}_B(x,y)$ est le vecteur qui portera la marque.

Si $D_{B,C}(x,y) > D_{A,B}(x,y)$ et $D_{B,C}(x,y) > D_{A,C}(x,y)$, alors $\vec{V}_B(x,y)$ et $\vec{V}_C(x,y)$ sont les vecteurs de référence et $\vec{V}_A(x,y)$ est le vecteur qui portera la marque.

Dans un mode de réalisation particulier de l'invention, les distances entre les vecteurs sont calculées, deux à deux, pour chacune des 256 coordonnées possibles (16*16 coefficients d'ondelettes dans les images de détails).

$$D_{R,G}(x,y) = \left| \vec{V}_R(x,y) - \vec{V}_G(x,y) \right|$$

$$D_{R,B}(x,y) = \left| \vec{V}_R(x,y) - \vec{V}_B(x,y) \right|$$

$$D_{G,B}(x,y) = \left| \vec{V}_G(x,y) - \vec{V}_B(x,y) \right|$$

Si $D_{R,G}(x,y) > D_{R,B}(x,y)$ et $D_{R,G}(x,y) > D_{G,B}(x, y)$, alors $\vec{V}_R(x,y)$ et $\vec{V}_G(x,y)$ sont les vecteurs de référence et $V_B(x,y)$ le vecteur qui portera la marque.

Si $D_{R,B}(x,y) > D_{R,G}(x,y)$ et $D_{R,B}(x, y) > D_{G,B}(x,y)$, alors $\vec{V}_R(x,y)$ et $\vec{V}_B(x,y)$ sont les vecteurs de référence et $V_G(x,y)$ le vecteur qui portera la marque.

Si $D_{G, B}(x,y) > D_{R, G}(x,y)$ et $D_{G,B}(x,y) > D_{R,B}(x,y)$, alors $\vec{V}_G(x,y)$ et $\vec{V}_B(x,y)$ sont les vecteurs de référence et $\vec{V}_R(x,y)$ le vecteur qui portera la marque.

### 3.3 Définition et choix de la convention de marquage

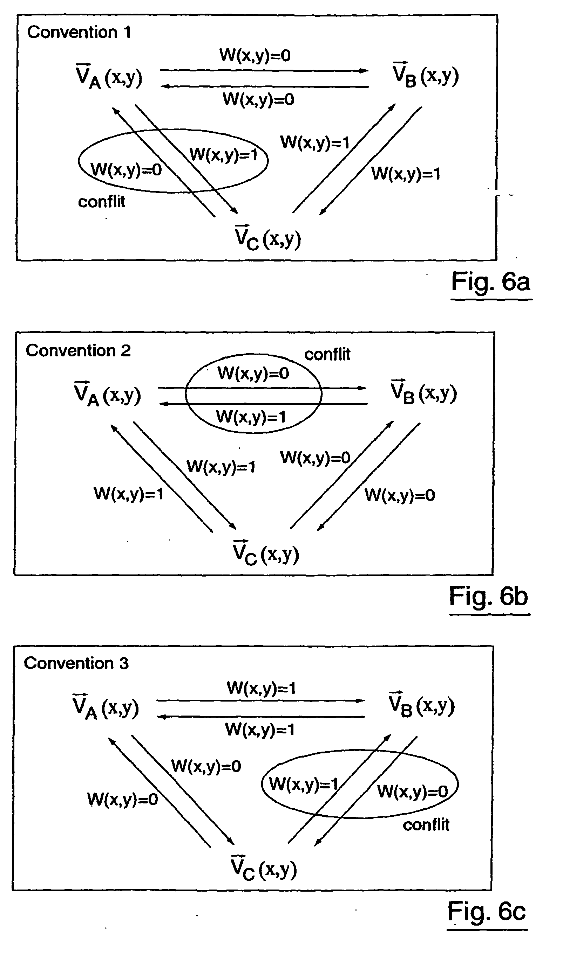

Pour chaque coordonnée des images de détails, on cherche à connaître le nombre de fois que les vecteurs $\vec{V}_A(x,y)$, $\vec{V}_B(x,y)$ et $\vec{V}_C(x,y)$ sont utilisés comme référence. Cette étape permet ainsi de choisir la meilleure convention pour l'opération d'insertion (voir figures 6a à 6c), pour minimiser le conflit qui sera expliqué plus en détail au §3.5.

Si $\vec{V}_A(x,y)$ est le vecteur le moins utilisé comme référence, on choisit la convention 3, illustrée en figure 6c.

Si $\vec{V}_B(x,y)$ est le vecteur le moins utilisé comme référence, on choisit la convention 1, illustrée en figure 6a.

Si $\vec{V}_C(x,y)$ est le vecteur le moins utilisé comme référence, on choisit la convention 2, illustrée en figure 6b.

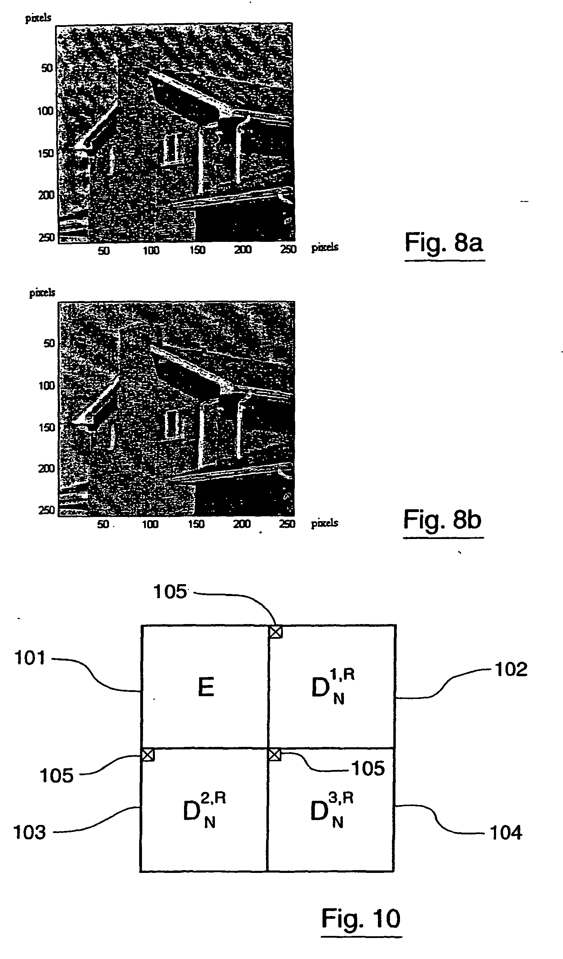

Ainsi, dans le cas de l'image 'Maison' illustrée en figures 8a (image originale) et 8b (image marquée), le vecteur $\vec{V}_R(x,y)$ est utilisé 235 fois en tant que vecteur référence, le vecteur $\vec{V}_G(x,y)$, 108 fois et le vecteur $\vec{V}_B(x,y)$, 169 fois. Pour minimiser le conflit, on utilise donc la convention 1, présentée sur la figure 6a.

Toutefois, il est conseillé de faire un choix précis dans le cas des images de petite taille. Le choix automatique de la convention de marquage est mieux adapté aux images de grande taille (au moins quelques milliers de pixels).

### 3.4 Opération d'insertion

Le marquage consiste à modifier le vecteur en plaçant son extrémité plus près de l'extrémité de l'un des deux vecteurs de référence, en fonction de la valeur de la marque (0 ou 1), et cela pour chaque coordonnées 50, ainsi qu'illustré par la figure 5. On note $\vec{V}_{R1}(x,y)$ et $\vec{V}_{R2}(x,y)$ (51 et 52) les deux vecteurs de référence et $\vec{V}_M(x,y)$ le vecteur à marquer 53.

De façon générale, le marquage se présente sous la forme :

$$\vec{V}_{M,W}(x,y) = \vec{V}_R(x,y) - (1 - F_M)(\vec{V}_R(x,y) - \vec{V}_M(x,y)) \qquad (1)$$

avec suivant le cas : $\vec{V}_R = \vec{V}_{R1}$ *ou* $\vec{V}_R = \vec{V}_{R2}$ suivant la valeur de M et la convention choisie.

$F_M$ représente la force de marquage appliquée au vecteur $\vec{V}_M(x,y)$ avec M={A, B, C}. La force de marquage peut être ainsi adaptée en fonction des caractéristiques (colorimétrique ou de texture) locales de l'image.

Deux cas de figure peuvent se présenter, ainsi qu'illustré pour un cas particulier par la figure 7. Suivant la convention choisie et suivant la valeur de la marque W(x,y) :

- le vecteur $\vec{V}_M(x,y)$ 73 est déjà dans le demi-espace correct où $\vec{V}_{M,W}(x,y)$ doit être placé. Dans ce cas, la formule (1) peut être appliquée directement à $\vec{V}_M(x,y)$ 73.

  Ce cas de figure est illustré sur la figure 7, en considérant le cas particulier où W(x,y)=1, et où la convention impose que $\vec{V}_{M,W}(x,y)$ soit dans le demi-espace contenant $\vec{V}_{R2}(x,y)$ 72.

- le vecteur $\vec{V}_M(x,y)$ 73 n'est pas dans le demi-espace correct où $\vec{V}_{M,W}(x,y)$ doit être placé. Dans ce cas, avant d'appliquer la formule (1) à $\vec{V}_M(x,y)$ 73, il faut modifier la position de l'extrémité de ce vecteur. Pour cela, il faut déplacer cette extrémité dans une direction colinéaire au vecteur $\vec{V}_{col}(x,y) = \vec{V}_{R1}(x,y) - \vec{V}_{R2}(x,y)$, d'une distance $(D_m + \varepsilon)$, où $D_m$ est équivalente à la distance entre $\vec{V}_M(x,y)$ 73 et $(P_M)$ (où $P_M$ est la frontière entre les deux demi-espaces associés à chacun des vecteurs de référence 71 et 72). On choisit de préférence $\varepsilon$ égal à 10% de $D_m$, de façon à ce que $\vec{V}_M(x,y)$ 73 ne soit pas confondu avec $(P_M)$.

Ce cas de figure est illustré sur la figure 7, en considérant le cas particulier où *W(x,y)=0*, et où la convention impose que $\vec{V}_{M,W}(x,y)$ soit dans le demi-espace contenant $\vec{V}_{R1}(x,y)$ 71.

On notera que dans le cas où $F_M = 0$, le marquage est de robustesse minimum. Le vecteur $\vec{V}_M(x,y)$ 73 devient $\vec{V}_{M,W}(x,y)$ *par* simple déplacement (si nécessaire) dans le demi-espace correspondant aux positions des vecteurs de référence 71 et 72, à la valeur de la marque et à la convention choisie. L'image est ainsi dégradée au minimum.

Dans le cas où $F_M = 1$, la force de marquage est maximum. La marque est très robuste, mais a une grande probabilité d'être visible. $\vec{V}_{M,W}(x,y)$ devient alors confondu à l'un des vecteurs de référence 71 et 72 en fonction de la situation précédemment indiquée.

Le fait de choisir une valeur intermédiaire à $F_M$ permet de contrôler le compromis entre invisibilité et robustesse de la marque.

### 3.5 Conflit

Les schémas de convention de marquage définissent le sens du marquage pour chacun des cas de figures possibles. Dans le cas où la force de marquage $F_M = 1$, c'est-à-dire qu'elle est maximum, le vecteur marqué devient égal à un vecteur de référence.

Ainsi, sur les figures 6a à 6c , on remarque que, pour chacune des conventions, les bits de la marque sont opposés pour l'une des branches des triangles de convention. Un conflit est alors possible. En effet, lors de la transmission de l'image marquée ou des traitements qu'elle peut subir, les deux vecteurs confondus peuvent être sensiblement modifiés. Il est alors possible que le vecteur de référence devienne le vecteur marqué et vice-versa.

Lors de la détection de la marque (qui sera décrite plus en détail au §5 ci-dessous), des erreurs de détection peuvent alors être intégrées à cause de ce conflit. Le conflit est minimisé si la convention choisie minimise ce cas de figure. L'étape de choix de la convention proposée au §4.3 ci-dessus est donc particulièrement importante.

Dans le cas d'un conflit, l'opération de marquage devient :

$$\vec{V}_{M,W}(x,y) = \vec{V}_R(x,y) - beta.(1 - F_M)(\vec{V}_R(x,y) - \vec{V}_M(x,y))$$

où beta<1.

Ainsi le choix de la convention permet de minimiser le nombre de conflits, et les erreurs dues aux conflits sont aussi minimisées par l'application d'un facteur beta dans l'opération de marquage.

Dans un mode de réalisation particulier de l'invention, les forces de marquage utilisées sont les suivantes : $F_R$=0,4 (pour la composante rouge) ; $F_G$=0,4 (pour la composante verte) ; $F_B$=0,8 (pour la composante bleue), avec *beta* = 0,9 (en cas de conflit).

### 3.6 Reconstruction de l'image

L'image est ensuite reconstruite par transformée en ondelettes inverse, en tenant compte des coefficients modifiés par le marquage. Ainsi, la figure 8b illustre l'image « maison » marquée, reconstruite par transformée en ondelettes inverse, et la figure 8a présente la même image avant marquage.

### 4. Détection de la marque

On décrit désormais les différentes opérations mises en oeuvre lorsque l'on cherche à détecter une marque dans une image couleur tatouée selon l'invention. En effet, après traitement de la marque (transmission, compression JPEG, filtrage médian ou ajout de bruit), la marque peut être détectée.

### 4.1 Décomposition en ondelettes

L'opération de décomposition dans le domaine des ondelettes de l'image marquée est identique à celle effectuée dans le cadre du marquage, présentée au paragraphe 1 ci-dessus.

### 4.2 Définition des vecteurs et choix de la convention

De même, les opérations de définition des vecteurs et du choix de la convention de marquage sont identiques à celles définies précédemment dans les paragraphes 3.1, 3.2 et 3.3.

### 4.3 Récupération d'un bit de la marque détectée

Pour chaque coordonnée, on vérifie la proximité entre le vecteur marqué et les deux vecteurs de référence. Suivant la convention choisie, il est possible de reconnaître la valeur du bit intégré. Le tableau 1 ci-dessous présente tous les cas de figure possibles dans la reconstruction de la marque. La marque est ainsi reconstruite bit par bit.

| | convention 1 | convention 2 | convention 3 |
|---|---|---|---|
| $\left|\vec{V}_A(x,y) - \vec{V}_B(x,y)\right| < \left|\vec{V}_A(x,y) - \vec{V}_C(x,y)\right|$ | 0 | 0 | 1 |
| $\left|\vec{V}_A(x,y) - \vec{V}_C(x,y)\right| < \left|\vec{V}_A(x,y) - \vec{V}_B(x,y)\right|$ | 1 | 1 | 0 |
| $\left|\vec{V}_B(x,y) - \vec{V}_A(x,y)\right| < \left|\vec{V}_B(x,y) - \vec{V}_C(x,y)\right|$ | 0 | 1 | 1 |

(suite)

| | convention 1 | convention 2 | convention 3 |
|---|---|---|---|
| $\left\| \bar{V}_B(x,y) - \bar{V}_C(x,y) \right\| < \left\| \bar{V}_B(x,y) - \bar{V}_A(x,y) \right\|$ | 1 | 0 | 0 |
| $\left\| \bar{V}_C(x,y) - \bar{V}_A(x,y) \right\| < \left\| \bar{V}_C(x,y) - \bar{V}_B(x,y) \right\|$ | 0 | 1 | 0 |
| $\left\| \bar{V}_C(x,y) - \bar{V}_B(x,y) \right\| < \left\| \bar{V}_C(x,y) - \bar{V}_A(x,y) \right\|$ | 1 | 0 | 1 |

### 4.4 Reconstruction de la signature

La signature détectée est ensuite reconstruite à partir de la marque détectée. Pour cela, la moyenne des bits de la marque correspondant à une coordonnée de la signature est effectuée, selon un principe similaire à celui utilisé lors de la construction de la marque décrite au paragraphe 2. Ainsi, la signature détectée $\hat{S}$ est reconstruite, bit par bit.

En d'autres termes, on commence, pour chaque coordonnée des images de détails, par détecter chaque bit de la marque, en s'appuyant sur le tableau ci-dessus, qui indique la valeur du bit inséré, pour chacune des conventions des figures 6a à 6c, en fonction des distances entre vecteurs.

Dans un mode de réalisation particulier de l'invention, la signature $\hat{S}$ de 16 bits est ensuite reconstruite par le calcul de la moyenne des 16 valeurs de la marque pour chaque coordonnée correspondante, suivant la forme de la redondance définie dans le paragraphe 2.

### 4.5 Reconnaissance de la signature marquée par rapport à la signature initiale

Il reste à définir le taux de correspondance entre la signature initiale et la signature détectée. Pour cela, on effectue le calcul de la corrélation entre les deux signatures S et $\hat{S}$ par l'opération suivante :

$$cc(S,\hat{S}) = \frac{\sum \bar{S}(x,y) * \bar{\hat{S}}(x,y)}{\sqrt{\sum \bar{S}^2(x,y)}\sqrt{\sum \bar{\hat{S}}^2(x,y)}}$$

Les deux signatures correspondent si $cc(S, \hat{S}) \geq T$, où T est le seuil de décision pour la correspondance des signatures.

Ce calcul de corrélation permet de définir le taux de ressemblance entre la signature originale *S* et la signature détectée *S*. Dans un mode de réalisation particulier de l'invention, on fixe le seuil T à 0,7, de sorte que l'on considère que si $cc(S,\hat{S}) \geq 0,7$, la signature détectée correspond à la signature originale.

Comme indiqué précédemment, les figures 8a et 8b présentent une image originale, et l'image marquée correspondante, selon les paramètres du mode de réalisation particulier de l'invention exposé ci-dessus.

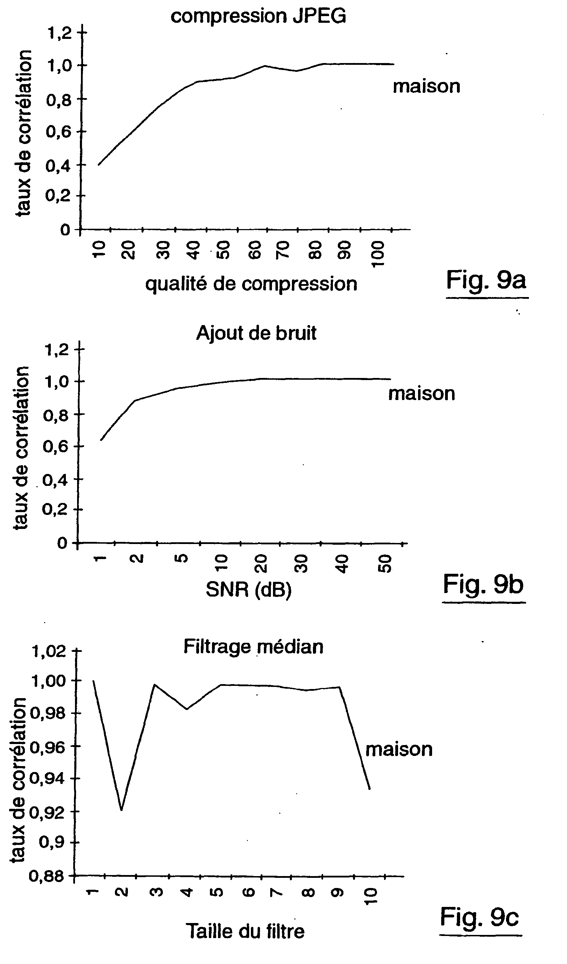

Les figures 9a à 9c illustrent, sous forme de graphes, les résultats de tests de robustesse de la marque insérée sur l'image « maison » des figures 8a et 8b. Les graphes des figures 9a à 9c correspondent respectivement aux tests de la marque face aux attaques de compression JPEG, à l'ajout de bruit et au filtrage médian, et représentent la moyenne de 20 mesures (utilisation de 20 clefs K différentes) pour chaque attaque. Comme on peut le voir, les résultats sont stables, et la robustesse de la technique de tatouage de l'invention contre ces attaques est très bonne.

### <u>ANNEXE 1:</u> RAPPEL SUR LA THÉORIE DES ONDELETTES

### <u>1. Introduction</u>

La théorie des ondelettes permet d'approximer une fonction (courbe, surface, etc.) à différentes résolutions. Ainsi, cette théorie permet de décrire une fonction sous la forme d'une approximation grossière et d'une série de détails permettant de reconstruire parfaitement la fonction originale.

Une telle représentation multi-résolution (Mallat S., "*A Theory for Multiresolution Signal Decomposition: the Wavelet Representation",* IEEE Transactions on Pattern Analysis and Machine Intelligence, Vol. 11, No. 7, Juillet 1989, pp. 674-693.) d'une fonction permet donc d'interpréter de façon hiérarchique l'information contenue dans la fonction. Pour ce faire, cette information est réorganisée en un ensemble de détails apparaissant à différentes résolutions. Partant d'une séquence de résolutions croissantes $(r_j)_{j \in Z}$, les détails d'une fonction à la résolution $r_j$ sont définis comme la différence d'information entre son approximation à la résolution $r_j$ et son approximation à la résolution $r_{j+1}$.

## 2. Notations

Avant de présenter plus en détail les fondements de l'analyse multi-résolution, on présente dans cette section les notations utilisées.

- ❖ Les ensembles des nombres entiers et réels sont respectivement notés $Z$ et $R$.
- ❖ $L^2(R)$ dénote l'espace vectoriel des fonctions unidimensionnelles $f(x)$ mesurables et intégrables.
- ❖ Pour $f(x) \in L^2(R)$ et $g(x) \in L^2(R)$, le produit scalaire de $f(x)$ et g(x) est défini par :

$$\langle f(x), g(x) \rangle = \int_{-\infty}^{+\infty} f(u)g(u)du .$$

- ❖ Pour $f(x) \in L^2(R)$ et $g(x) \in L^2(R)$, la convolution de $f(x)$ et $g(x)$ est définie par :

$$f * g(x) = \int_{-\infty}^{+\infty} f(u)g(x-u)du .$$

- ❖ $L^2(R^2)$ dénote l'espace vectoriel des fonctions $f(x,y)$ de deux variables mesurables et intégrables.
- ❖ Pour $f(x,y) \in L^2(R^2)$ et $g(x,y) \in L^2(R^2)$, le produit scalaire de $f(x,y)$ et $g(x,y)$ est défini par :

$$\langle f(x,y), g(x,y) \rangle = \int_{-\infty}^{+\infty} \int_{-\infty}^{+\infty} f(u,v)g(u,v)dudv .$$

## 3. Propriétés de l'analyse multi-résolution

Dans cette section, on présente de manière intuitive les propriétés désirées de l'opérateur permettant l'analyse multi-résolution d'une fonction. Ces propriétés sont issues des travaux de Mallat S., dans *"A Theory for Multiresolution Signal Decomposition: the Wavelet Representation"*, IEEE Transactions on Pattern Analysis and Machine Intelligence, Vol. 11, No. 7, Juillet 1989, pp. 674-693. Soit $A_{2^j}$ l'opérateur qui approxime une fonction $f(x) \in L^2(R)$ à la résolution $2^j$ ($j \geq 0$) (i.e. $f(x)$ est définie par $2^j$ échantillons).
Les propriétés attendues de $A_{2^j}$ sont les suivantes :

1. $A_{2^j}$ est un opérateur linéaire. Si $A_{2^j} f(x)$ représente l'approximation de $f(x)$ à la résolution $2^j$, alors $A_{2^j}f(x)$ ne doit pas être modifié lorsqu'on l'approxime de nouveau à la résolution $2^j$. Ce principe s'écrit $A_{2^j} \circ A_{2^j} = A_{2^j}$ et montre que l'opérateur $A_{2^j}$ est un opérateur de projection dans un espace vectoriel $V_{2^j} \subset L^2(R)$. Cet espace vectoriel peut être interprété comme l'ensemble de toutes les approximations possibles à la résolution $2^j$ des fonctions de $L^2(R)$.
2. Parmi toutes les approximations possibles de $f(x)$ à la résolution $2^j$, $A_{2^j}f(x)$ est la plus similaire à f(x). L'opérateur $A_{2^j}$ est donc une projection orthogonale sur $V_{2^j}$.
3. L'approximation d'une fonction à la résolution $2^{j+1}$ contient toute l'information nécessaire pour calculer la même fonction à la résolution inférieure $2^j$. Cette propriété de causalité induit la relation suivante :

$$\forall j \in Z, V_{2^j} \subset V_{2^{j+1}} .$$

4. L'opération d'approximation est la même à toutes les résolutions. Les espaces des fonctions approximées peuvent être dérivés les uns des autres par un changement d'échelle correspondant à la différence de résolution :

$$\forall j \in Z, f(x) \in V_{2^j} \Leftrightarrow f(2x) \in V_{2^{j+1}} .$$

5. Lorsque l'on calcule une approximation de $f(x)$ à la résolution $2^j$, une partie de l'information contenue dans $f(x)$

est perdue. Cependant, lorsque la résolution tend vers l'infini, la fonction approximée doit converger vers la fonction *f(x)* originale. De la même façon, lorsque la résolution tend vers zéro, la fonction approximée contient moins d'information et doit converger vers zéro.

Tout espace vectoriel $(V_{2j})_{j\in Z}$ qui satisfait l'ensemble de ces propriétés est appelé *approximation multi-résolution de $L^2(R)$.*

### 4. Analyse multi-résolution d'une fonction unidimensionnelle

#### *4.1 Recherche d'une base de $V_{2j}$*

Comme indiqué ci-dessus, l'opérateur d'approximation $A_{2j}$ est une projection orthogonale sur l'espace vectoriel $V_{2j}$. Afin de caractériser numériquement cet opérateur, il faut trouver une base orthonomale de $V_{2j}$.

$V_{2j}$ étant un espace vectoriel contenant les approximations de fonctions de $L^2(R)$ à la résolution $2^j$, toute fonction $f(x) \in V_{2j}$ peut être vue comme un vecteur à $2^j$ composantes. Il faut donc trouver $2^j$ fonctions de base.

Un des théorèmes principaux de la théorie des ondelettes stipule qu'il existe une fonction unique $\Phi(x) \in L^2(R)$, appelée fonction échelle, à partir de laquelle on peut définir $2^j$ fonctions de base $\Phi_i^j(x)$ de $V_2$, par dilatation et translation de $\Phi(x)$ :

$$\Phi_i^j(x) = \Phi(2^j x - i), i = 0, \cdots, 2^j - 1.$$

Approximer une fonction $f(x) \in L^2(R)$ à la résolution $2^j$ revient donc à projeter de façon orthogonale $f(x)$ sur les $2^j$ fonctions de base $\Phi_i^j(x)$. Cette opération consiste à calculer le produit scalaire de $f(x)$ avec chacune des $2^j$ fonctions de base $\Phi_i^j(x)$ :

$$A_{2^j}f(x) = \sum_{k=0}^{k=2^j-1} \left\langle f(u), \Phi_k^j(u) \right\rangle \Phi_k^j(x)$$

$$= \sum_{k=0}^{k=2^j-1} \left\langle f(u), \Phi(2^j u - k) \right\rangle \Phi(2^j u - k).$$

On peut montrer que $A_2^j f(x)$ peut être réduit la convolution de $f(x)$ avec le filtre passe-bas $\Phi(x)$, évaluée au point $k$ :

$$A_{2^j}f = (f(u) * \Phi(-2^j u))(k), k \in Z.$$

Comme $\Phi(x)$ est un filtre passe-bas, $A_{2j}f$ peut être interprété comme un filtrage passe-bas suivi d'un sous-échantillonnage uniforme.

#### *4.2 Construction de l'analyse multi-résolution*

Dans la pratique, les fonctions $f$ à approximer (signal, image, etc.) sont discrètes. Supposons que la fonction $f(x)$ originale soit définie sur $n = 2^k$ $(k \in Z)$ échantillons. La résolution maximale de $f(x)$ est alors $n$.

Soit $A_n f$ l'approximation discrète de $f(x)$ à la résolution $n$. La propriété de causalité (voir §3 ci-dessus) prétend que l'on peut calculer $A_{2j}f$ à partir de $A_n f$ pour tout $j < k$ .

En effet, en calculant la projection des $2^j$ fonctions de base $\Phi_i^j(x)$ de $V_{2j}$ sur $V_{2j}+1$, on peut montrer que $A_{2j}f$ peut être obtenue en convoluant $A_2 j+1$ $f$ avec le filtre passe-bas correspondant à la fonction échelle et en sous-échantillonnant le résultat d'un facteur 2 :

$$A_{2^j} f(u) = \sum_{k=0}^{2^{j+1}-1} h(k-2u) A_{2^{j+1}} f(k), 0 \le u < 2^j - 1$$

avec $h(n) = \langle \Phi(2u), \Phi(u-n) \rangle, \forall n \in Z$.

### 4.3 La fonction détail

Comme mentionné dans la propriété (5) du paragraphe 3, l'opération qui consiste à approximer une *fonction f(x)* à une résolution $2^j$ à partir d'une approximation à la résolution $2^{j+1}$ génère une perte d'information. Cette perte d'information est contenue dans une fonction appelée fonction détail à la résolution $2^j$ et notée $D_{2^j} f$. Il est à noter que la connaissance de $D_{2^j} f$ et $A_{2^j} f$ permet de reconstruire parfaitement la fonction approximée $A_{2^{j+1}} f$.

La fonction détail à la résolution $2^j$ est obtenue en projetant de manière orthogonale la fonction originale *f(x)* sur le complément orthogonal de $V_{2^j}$ dans $V_{2^{j+1}}$. Soit $W_{2^j}$ cet espace vectoriel.

Pour calculer numériquement cette projection, il faut trouver une base orthonormale de $W_{2^j}$ c'est-à-dire $2^j$ fonctions de base. Un autre théorème important de la théorie des ondelettes stipule qu'à partir d'une fonction échelle $\Phi(x)$, il est possible de définir $2^j$ fonctions de base de $W_{2^j}$. Ces fonctions de base $\Psi_i^j(x)$ sont obtenues par dilatation et translation d'une fonction $\Psi(x)$ appelée fonction ondelette :

$$\Psi_i^j(x) = \Psi(2^j x - i), i = 0, \cdots, 2^j - 1.$$

De la même façon que pour la construction de l'approximation $A_{2^j}$ f, on peut montrer que $D_{2^j}f$ peut être obtenu par une convolution de la fonction originale *f(x)* avec le filtre passe-haut $\Psi(x)$ suivi d'un sous-échantillonnage d'un facteur $2^j$ :

$$D_{2^j} f = (f(u) * \Psi(-2^j u))(k), k \in Z.$$

### 4.4 Extension à l'analyse multi-résolution de fonction bi-dimensionnelles

Dans cette section, on présente la manière d'étendre l'analyse multi-résolution par ondelettes aux fonctions de $L^2(R^2)$ comme les images.

Pour ce faire, on utilise les même théorèmes que ceux utilisés précédemment. Ainsi, si l'on note $V_{2^j}$ l'espace vectoriel des approximations de $L^2(R^2)$ à la résolution $2^j$, on peut montrer que l'on peut trouver une base orthonormale de $V_{2^j}$ en dilatant et translatant une fonction échelle $\Phi(x,y) \in L^2(R^2)$ :

$$\Phi_i^j(x,y) = \Phi(2^j x - i, 2^j y - j), (i,j) \in Z^2.$$

Dans le cas particulier des approximations séparables de $L^2(R^2)$, on a $\Phi(x, y) = \Phi(x)\Phi(y)$ où $\Phi(x)$ est une fonction échelle de $L^2(R)$. Dans ce cas, l'analyse multi-résolution d'une fonction de $L^2(R^2)$ est effectué en traitant de façon séquentielle et séparable chacune des dimensions *x* et *y*.

Comme dans le cas unidimensionnel, la fonction détail à la résolution $2^j$ est obtenue par une projection orthogonale de *f(x,y)* sur le complément de $V_{2^j}$ dans $V_{2^{j+1}}$ noté $W_{2^j}$. Dans le cas bidimensionnel, on peut montrer que si l'on note $\Psi(x)$ la fonction ondelette associé à la fonction échelle $\Phi(x)$, alors les trois fonctions définies par :

$$\Psi^1(x,y) = \Phi(x)\Psi(y)$$

$$\Psi^2(x,y) = \Psi(x)\Phi(y)$$

$$\Psi^3(x,y) = \Psi(x)\Psi(y)$$

sont des fonctions ondelettes de $L^2(R^2)$. En dilatant et translatant ces trois fonctions ondelettes, on obtient une base orthonormale de $W_{2j}$:

$$\Psi_j^1(x,y) = \Phi\Psi(2^j x - k, 2^j y - l)$$

$$\Psi^2(x,y) = \Psi\Phi(2^j x - k, 2^j y - l)$$

$$\Psi^3(x,y) = \Psi\Psi(2^j x - k, 2^j y - l).$$

La projection de f(x,y) sur des trois fonctions de la base de $W_{2j}$ donne trois fonctions détails :

$$D_{2^j}^1 f = f(x,y) * \Phi^j(-x)\Psi_j(-y)$$

$$D_{2^j}^2 f = f(x,y) * \Psi^j(-x)\Phi_j(-y)$$

$$D_{2^j}^1 f = f(x,y) * \Psi^j(-x)\Psi_j(-y)$$

**Revendications**

1.  Procédé de tatouage d'une image (10) en couleurs, présentant trois composantes (A, B, C), **caractérisé en ce qu'**il comprend une étape d'insertion d'une marque de tatouage (W), en au moins un point (50) de l'image, selon une règle d'insertion prenant en compte la position relative de trois vecteurs de composante $(\vec{V}_A, \vec{V}_B, \vec{V}_C)$, pour chacune desdites composantes respectivement, associés audit au moins un point.

2.  Procédé de tatouage selon la revendication 1, **caractérisé en ce qu'**on sélectionne, pour chacun desdits points concernés, deux vecteurs en tant que vecteurs de référence (51, 52 ;71, 72) et un vecteur à marquer (53 ;73) pour porter ladite marque de tatouage.

3.  Procédé de tatouage selon la revendication 2, **caractérisé en ce que** ledit vecteur à marquer (53 :73) est le vecteur central, se trouvant entre lesdits vecteurs **de** référence (51,52.71,72).

4.  Procédé de tatouage selon la revendication 3, **caractérisé en ce qu'**on calcule les distances deux à deux entre lesdits trois vecteurs, lesdits vecteurs de référence étant ceux les plus distants l'un de l'autre.

5.  Procédé de tatouage selon la revendication 4, **caractérisé en ce qu'**on détermine une frontière ($P_M$) entre lesdits vecteurs de référence, définissant deux zones associées respectivement aux valeurs binaires « 0 » et « 1 ».

6.  Procédé de tatouage selon la revendication 5, **caractérisé en ce que** ladite frontière ($P_M$) est définie par la bissectrice entre lesdits vecteurs de référence (71, 72).

7. Procédé de tatouage selon l'une quelconque des revendications 5 et 6, **caractérisé en ce que** le marquage dudit vecteur à marquer comprend un déplacement éventuel dudit vecteur à marquer dans l'une desdites zones, selon la valeur binaire de marquage à appliquer.

8. Procédé de tatouage selon la revendication 7, **caractérisé en ce que** ledit déplacement a une amplitude variable, fonction d'une force de marquage $(F_M)$ choisie en fonction d'au moins une caractéristique locale de ladite image.

9. Procédé de tatouage selon l'une quelconque des revendications 5 à 8, **caractérisé en ce que** le marquage dudit vecteur à marquer comprend un déplacement éventuel dudit vecteur à marquer vers l'un ou l'autre desdits vecteurs de référence, selon la valeur binaire de marquage à appliquer.

10. Procédé de tatouage selon l'une quelconque des revendications 1 à 9, **caractérisé en ce qu'**il comprend également une étape de transformation en ondelettes de chacune desdites composantes de l'image, et **en ce que** lesdits trois vecteurs de composantes sont déterminés, pour chaque point d'au moins un niveau de décomposition de ladite transformation en ondelettes, pour chacune desdites composantes respectivement.

11. Procédé de tatouage selon l'une quelconque des revendications 1 à 10, **caractérisé en ce qu'**on prévoit au moins deux conventions de marquage d'un vecteur.

12. Procédé de tatouage selon la revendication 11, **caractérisé en ce qu'**on choisit comme convention de marquage pour une image donnée celle limitant les risques de conflit lors de la détection de ladite marque.

13. Procédé de tatouage selon la revendication 12, **caractérisé en ce qu'**on choisit une desdites conventions en fonction des nombres de vecteurs de référence présent dans ladite image pour chacune desdites composantes.

14. Procédé de tatouage selon l'une quelconque des revendications 6 à 13, **caractérisé en ce que** ledit marquage est, au moins en l'absence de conflit, calculé selon l'équation suivante :

$$\vec{V}_{M.W}(x,y) = \vec{V}_R(x,y) - (1 - F_M)(\vec{V}_R(x,y) - \vec{V}_M(x,y))$$

où $\vec{V}_M(x,y)$ est ledit vecteur à marquer, $\vec{V}_R(x,y)$ est un desdits vecteurs de référence, $F_M$ est ladite force de marquage et $\vec{V}_{M.W}(x,y)$ est ledit vecteur marqué.

15. Procédé de tatouage selon les revendications 11 et 14, **caractérisé en ce que**, en cas de conflit, ledit marquage est calculé selon l'équation suivante :

$$\vec{V}_{M.W}(x,y) = \vec{V}_R(x,y) - beta.(1 - F_M)(\vec{V}_R(x,y) - \vec{V}_M(x,y)),$$

où *beta<1*.

16. Procédé de tatouage selon l'une quelconque des revendications 10 à 15, **caractérisé en ce qu'**il comprend, après ladite étape d'association d'une marque de tatouage, une étape de transformation en ondelettes inverse, délivrant une image marquée.

17. Procédé de tatouage selon l'une quelconque des revendications 1 à 15, **caractérisé en ce que** ladite marque est une signature binaire pseudo-aléatoire (40) écrite de façon redondante.

18. Procédé de tatouage selon l'une quelconque des revendications 1 à 17, **caractérisé en ce que** lesdites composantes appartiennent au groupe comprenant :

    - les composantes RGB ;
    - les composantes YUV ;

- les composantes CMY.

**19.** Dispositif de tatouage d'une image en couleurs, présentant trois composantes, **caractérisé en ce qu'**il comprend des moyens d'insertion d'une marque de tatouage, en au moins un point de l'image, selon une règle d'insertion prenant en compte la position relative de trois vecteurs de composante, pour chacune desdites composantes respectivement, associés audit au moins un point.

**20.** Programme d'ordinateur comprenant des instructions de code de programme enregistré sur un support utilisable dans un ordinateur pour le tatouage d'une image en couleurs, présentant trois composantes, **caractérisé en ce que** ledit programme comprend des moyens de programmation lisibles par ordinateur pour effectuer une étape d'insertion d'une marque de tatouage, en au moins un point de l'image, selon une règle d'insertion prenant en compte la position relative de trois vecteurs de composante, pour chacune desdites composantes respectivement, associés audit au moins un point.

**21.** Image en couleurs présentant trois composantes et comprenant un tatouage obtenu par insertion d'une marque de tatouage, en au moins un point de l'image, selon une règle d'insertion prenant en compte la position relative de trois vecteurs de composante, pour chacune desdites composantes respectivement, associés audit au moins un point.

**22.** Procédé de détection d'un tatouage dans une image tatouée, réalisé selon le procédé de l'une quelconque des revendications 1 à 18, **caractérisé en ce qu'**il comprend une étape de récupération d'une marque de tatouage (W), en au moins un point (50) de l'image, selon une règle de récupération prenant en compte la position relative de trois vecteurs de composante, pour chacune desdites composantes respectivement, associés audit au moins un point.

**23.** Procédé de détection selon la revendication 22, **caractérisé en ce que** ladite étape de récupération comprend une sous-étape de calcul des distances deux à deux entre lesdits trois vecteurs, et **en ce que** les deux vecteurs les plus distants l'un de l'autre sont des vecteurs de référence (51, 52 ; 71, 72), le troisième vecteur étant le vecteur marqué (53 ; 73) portant ladite marque de tatouage.

**24.** Procédé de détection selon la revendication 23, **caractérisé en ce que**, une frontière ($P_M$) entre lesdits vecteurs de référence définissant deux zones associées respectivement aux valeurs binaires « 0 » et « 1 », ladite étape de récupération comprend également une sous-étape de repérage de la zone dans laquelle se situe ledit vecteur marqué, et une étape d'association d'une valeur binaire correspondante.

**25.** Procédé de détection selon l'une quelconque des revendications 22 à 24, **caractérisé en ce que** ladite marque est récupérée au moins deux fois, et **en ce qu'**on met en oeuvre un calcul de corrélation par rapport à une signature de référence (S), afin de décider si le tatouage est ou non correctement détecté.

**26.** Dispositif de détection d'un tatouage dans une image tatouée, réalisé selon le procédé de l'une quelconque des revendications 1 à 18, **caractérisé en ce qu'**il comprend des moyens de récupération d'une marque de tatouage, en au moins un point de l'image, selon une règle de récupération prenant en compte la position relative de trois vecteurs de composante, pour chacune desdites composantes respectivement, associés audit au moins un point.

**27.** Programme d'ordinateur comprenant des instructions de code de programme enregistré sur un support utilisable dans un ordinateur pour la détection d'un tatouage dans une image tatouée, réalisé selon le procédé de l'une quelconque des revendications 1 à 18, **caractérisé en ce que** ledit programme comprend des moyens de programmation lisibles par ordinateur pour effectuer une étape de récupération d'une marque de tatouage, en au moins un point de l'image, selon une règle de récupération prenant en compte la position relative de trois vecteurs de composante, pour chacune desdites composantes respectivement, associés audit au moins un point.

**Claims**

**1.** Method of watermarking a colour image (10) which has three components (A, B, C), **characterized in that** it comprises a stage of inserting a watermarking mark (W) in at least one point (50) of the image, according to an insertion rule taking into account the relative position of three component vectors

($\vec{V}_A$, $\vec{V}_B$, $\vec{V}_C$) for each of said components respectively, associated with said at least one point.

**2.** Method of watermarking according to Claim 1,
**characterized in that** for each of said related points, two vectors as reference vectors (51, 52; 71, 72) and one vector to be marked (53; 73) to carry said watermarking mark are selected.

**3.** Method of watermarking according to Claim 2,
**characterized in that** said vector to be marked (53; 73) is the central vector, positioned between said reference vectors (51, 52; 71, 72).

**4.** Method of watermarking according to Claim 3,
**characterized in that** the distances between any two vectors of said three vectors are calculated, said reference vectors being those furthest away from each other.

**5.** Method of watermarking according to Claim 4,
**characterized in that** a border ($P_M$) between said reference vectors is determined, defining two zones which are associated with binary values "0" and "1" respectively.

**6.** Method of watermarking according to Claim 5,
**characterized in that** said border ($P_M$) is determined by the bisector between said reference vectors (71, 72).

**7.** Method of watermarking according to any one of Claims 5 and 6, **characterized in that** the marking of said vector to be marked comprises a possible displacement of said vector to be marked in one of said zones, according to the binary value for marking to be applied.

**8.** Method of watermarking according to Claim 7,
**characterized in that** said displacement has a variable amplitude, as a function of a marking force ($F_M$) which is chosen as a function of at least one local characteristic of said image.

**9.** Method of watermarking according to any one of Claims 5 to 8, **characterized in that** the marking of said vector to be marked comprises a possible displacement of said vector to be marked towards one or other of said reference vectors, according to the binary value of the marking to be applied.

**10.** Method of watermarking according to any one of Claims 1 to 9, **characterized in that** it also comprises a transformation stage into wavelets of each of said components of the image, and **in that** said three component vectors are determined, for each point of at least one level of decomposition of said transformation into wavelets, for each of said components respectively.

**11.** Method of watermarking according to any one of Claims 1 to 10, **characterized in that** at least two marking conventions for a vector are provided.

**12.** Method of watermarking according to Claim 11,
**characterized in that** as a marking convention for a given image, the one limiting the risks of conflict at the time of detecting said mark is chosen.

**13.** Method of watermarking according to Claim 12,
**characterized in that** one of said conventions is chosen as a function of the number of reference vectors which are present in said image for each of said components.

**14.** Method of watermarking according to any one of Claims 6 to 13, **characterized in that** said marking is, at least in the absence of conflict, calculated according to the following equation:

$$\vec{V}_{M,W}(x,y) = \vec{V}_R(x,y) - (1-F_M)(\vec{V}_R(x,y) - \vec{V}_M(x,y))$$

where $\vec{V}_M(x,y)$ is said vector to be marked, $\vec{V}_R(x,y)$ is one of said reference vectors, $F_M$ is said marking force and $\vec{V}_{M,W}(x,y)$ is said marked vector.

**15.** Method of watermarking according to Claims 11 and 14, **characterized in that**, in the case of conflict, said marking is calculated according to the following equation:

$$\vec{V}_{M,W}(x,y) = \vec{V}_R(x,y) - beta.(1\text{-}F_M)(\vec{V}_R(x,y) - \vec{V}_M(x,y))$$

where beta < 1.

**16.** Method of watermarking according to any one of Claims 10 to 15, **characterized in that** it comprises, after said stage of associating a watermarking mark, a transformation stage into inverse wavelets, providing a marked image.

**17.** Method of watermarking according to any one of Claims 1 to 15, **characterized in that** said mark is a pseudorandom binary signature (40) which is written in a redundant manner.

**18.** Method of watermarking according to any one of Claims 1 to 17, **characterized in that** said components belong to the group comprising:

   - the RGB components;
   - the YUV components;
   - the CMY components.

**19.** Device for watermarking a colour image which has three components, **characterized in that** it comprises means of inserting a watermarking mark in at least one point of the image, according to an insertion rule taking into account the relative position of three component vectors for each of said components respectively, associated with said at least one point.

**20.** Computer program comprising program code instructions which are recorded on a medium, which can be used in a computer to watermark a colour image, having three components, **characterized in that** said program comprises programming means which are readable by a computer in order to carry out an insertion stage of a watermarking mark in at least one point of the image, according to an insertion rule taking into account the relative position of three component vectors for each of said components respectively, associated with said at least one point.

**21.** Colour image having three components and comprising a watermark which is obtained by inserting a watermarking mark in at least one point of the image, according to an insertion rule taking into account the relative position of three component vectors for each of said components respectively, associated with said at least one point.

**22.** Method of detecting a watermark in a watermarked image, performed according to the method of any one of Claims 1 to 18, **characterized in that** it comprises a stage of recovering a watermarking mark (W) in at least one point (50) of the image, according to a recovery rule taking into account the relative position of three component vectors for each of said components respectively, associated with said at least one point.

**23.** Detection method according to Claim 22, **characterized in that** said recovery stage comprises a sub-stage for calculating any two distances between said three vectors, and **in that** the two vectors which are furthest away from each other are the reference vectors (51, 52; 71, 72), the third vector being the marked vector (53; 73) which carries said watermarking mark.

**24.** Detection method according to Claim 23, **characterized in that** a border ($P_M$) between said reference vectors defines two zones which are respectively associated with the binary values "0" and "1", and that said recovery stage also comprises a sub-stage for identifying the zone in which said marked vector is situated, and a stage for associating a corresponding binary value.

**25.** Detection method according to any one of Claims 22 to 24, **characterized in that** said mark is recovered at least twice, and that a correlation calculation is implemented with regard to a reference signature (S), in order to decide whether the watermark is or is not correctly detected.

26. Device for detecting a watermark in a watermarked image, performed according to the method of any one of Claims 1 to 18, **characterized in that** it comprises means of recovering a watermarking mark in at least one point of the image, according to a recovery rule taking into account the relative position of three component vectors for each of said components respectively, associated with said at least one point.

27. Computer program comprising program code instructions which are recorded on a medium, which can be used in a computer to detect a watermark in a watermarked image, performed according to the method of any one of Claims 1 to 18, **characterized in that** said program comprises programming means which are readable by a computer in order to carry out an recovery stage of a watermarking mark in at least one point of the image, according to a recovery rule taking into account the relative position of three component vectors for each of said components respectively, associated with said at least one point.

**Patentansprüche**

1. Verfahren zum Einfügen eines Wasserzeichens in ein Farbbild (10), welches drei Komponenten (A, B, C) aufweist, **dadurch gekennzeichnet, dass** es einen Schritt zum Einfügen eines Wasserzeichens (W) an mindestens einem Punkt (50) des Bildes umfasst, nach einer Einfügungsregel, welche jeweils für jede der besagten Komponenten die relative Position von drei dem mindestens einen Punkt zugeordneten Komponentenvektoren ($\vec{V}_A$, $\vec{V}_B$, $\vec{V}_C$) berücksichtigt.

2. Verfahren zum Einfügen eines Wasserzeichens nach Anspruch 1, **dadurch gekennzeichnet, dass** für jeden der betroffenen Punkte zwei Vektoren als Referenzvektoren (51, 52; 71, 72) und ein zu markierender Vektor (53; 73) zum Tragen der erwähnten Wasserzeichen gewählt werden.

3. Verfahren zum Einfügen eines Wasserzeichens nach Anspruch 2, **dadurch gekennzeichnet, dass** der zu markierende Vektor (53; 73) der Mittelvektor ist, der sich zwischen den Referenzvektoren (51, 52; 71, 72) befindet.

4. Verfahren zum Einfügen eines Wasserzeichens nach Anspruch 3, **dadurch gekennzeichnet, dass** der Abstand zwischen den drei erwähnten Vektoren paarweise berechnet wird, wobei die Referenzvektoren diejenigen sind, die den größten Abstand untereinander aufweisen.

5. Verfahren zum Einfügen eines Wasserzeichens nach Anspruch 4, **dadurch gekennzeichnet, dass** eine Grenze $(P_M)$ zwischen den Referenzvektoren festgelegt wird, welche zwei Bereiche definiert, die jeweils den binären Werten "0" und "1" zugeordnet sind.

6. Verfahren zum Einfügen eines Wasserzeichens nach Anspruch 5, **dadurch gekennzeichnet, dass** die erwähnte Grenze $(P_M)$ durch die Halbierende zwischen den Referenzvektoren (71, 72) definiert wird.

7. Verfahren zum Einfügen eines Wasserzeichens nach einem der Ansprüche 5 oder 6, **dadurch gekennzeichnet, dass** die Markierung des zu markierenden Vektors eine eventuelle Verschiebung dieses zu markierenden Vektors in eine der erwähnten Bereiche umfasst, abhängig von dem anzuwendenden binären Markierungswert.

8. Verfahren zum Einfügen eines Wasserzeichens nach Anspruch 7, **dadurch gekennzeichnet, dass** die Verschiebung eine variable Amplitude aufweist, die eine Funktion einer Markierungskraft $(F_M)$ ist, welche in Abhängigkeit von mindestens einer örtlichen Eigenschaft des Bildes gewählt wird.

9. Verfahren zum Einfügen eines Wasserzeichens nach einem der Ansprüche 5 bis 8, **dadurch gekennzeichnet, dass** die Markierung des zu markierenden Vektors eine mögliche Verschiebung des zu markierenden Vektors zu dem einen oder anderen der erwähnten Referenzvektoren umfasst, abhängig von dem anzuwendenden binären Markierungswert.

**10.** Verfahren zum Einfügen eines Wasserzeichens nach einem der Ansprüche 1 bis 9,
**dadurch gekennzeichnet, dass** es ebenfalls einen Transformationsschritt einer jeden Komponente des Bildes in Wavelets umfasst und dass die erwähnten drei Komponentenvektoren für jeden Punkt von mindestens einer Zerlegungsebene der erwähnten Transformation in Wavelets jeweils für jede der Komponenten bestimmt werden.

**11.** Verfahren zum Einfügen eines Wasserzeichens nach einem der Ansprüche 1 bis 10,
**dadurch gekennzeichnet, dass** mindestens zwei Markierungsregeln eines Vektors vorgesehen werden.

**12.** Verfahren zum Einfügen eines Wasserzeichens nach Anspruch 11,
**dadurch gekennzeichnet, dass** als Markierungsregel für ein gegebenes Bild diejenige gewählt wird, welche die Gefahr von Konflikten bei der Erfassung der erwähnten Markierung einschränkt.

**13.** Verfahren zum Einfügen eines Wasserzeichens nach Anspruch 12,
**dadurch gekennzeichnet, dass** eine der erwähnten Regeln in Abhängigkeit der vielen im erwähnten Bild, für jede der besagten Komponenten vorhandenen Referenzvektoren gewählt wird.

**14.** Verfahren zum Einfügen eines Wasserzeichens nach einem der Ansprüche 6 bis 13,
**dadurch gekennzeichnet, dass** die Markierung zumindest beim nicht Vorhandensein von Konflikten nach der folgenden Gleichung berechnet wird:

$$\vec{V}_{M,W}(x, y) = \vec{V}_R(x, y) - (1 - F_M)(\vec{V}_R(x, y) - \vec{V}_M(x, y))$$

wobei $\vec{V}_M(x, y)$ der zu markierende Vektor, $\vec{V}_R(x, y)$ eines der erwähnten Referenzvektoren, $F_M$ die Markierungskraft und $\vec{V}_{M,W}(x, y)$ der markierte Vektor ist.

**15.** Verfahren zum Einfügen eines Wasserzeichens nach einem der Ansprüche 11 oder 14,
**dadurch gekennzeichnet, dass** im Konfliktfall, die Markierung nach der folgenden Gleichung berechnet wird:

$$\vec{V}_{M,W}(x, y) = \vec{V}_R(x, y) - beta \cdot (1 - F_M)(\vec{V}_R(x, y) - \vec{V}_M(x, y)),$$

wobei *beta < 1* ist.

**16.** Verfahren zum Einfügen eines Wasserzeichens nach einem der Ansprüche 10 bis 15,
**dadurch gekennzeichnet, dass** es nach dem Schritt zum Zuordnen eines Wasserzeichens einen Transformationsschritt in umgekehrte Wavelets umfasst, der ein markiertes Bild liefert.

**17.** Verfahren zum Einfügen eines Wasserzeichens nach einem der Ansprüche 1 bis 15,
**dadurch gekennzeichnet, dass** die erwähnte Marke eine redundant geschriebene pseudozufällige binäre Signatur (40) ist.

**18.** Verfahren zum Einfügen eines Wasserzeichens nach einem der Ansprüche 1 bis 17,
**dadurch gekennzeichnet, dass** die erwähnten Komponenten der Folgendes umfassenden Gruppe angehören:

  - die RGB-Komponenten,
  - die YUV-Komponenten,
  - die CMY-Komponenten.

**19.** Vorrichtung zum Einfügen eines Wasserzeichens in ein Farbbild, das drei Komponenten aufweist,
**dadurch gekennzeichnet, dass** es über Mittel zum Einfügen eines Wasserzeichens an mindestens einem Punkt des Bildes verfügt, nach einer Einfügungsregel, welche die relative Position von drei dem mindestens einen Punkt zugeordneten Komponentenvektoren jeweils für jede der Komponenten berücksichtigt.

**20.** EDV-Programm, welches Programmcode-Anweisungen zum Einführen eines Wasserzeichens in ein drei Komponenten aufweisendes Farbbild enthält, die auf einem in einem Rechner einsetzbaren Datenträger gespeichert sind, **dadurch gekennzeichnet, dass** das Programm für einen Rechner lesbare Programmierungsmittel aufweist, um einen Schritt zum Einfügen eines Wasserzeichens an mindestens einem Punkt des Bildes auszuführen, nach einer Einfügungsregel, welche jeweils für jede der besagten Komponenten die relative Position von drei dem mindestens einen Punkt zugeordneten Komponentenvektoren berücksichtigt.

**21.** Farbbild, das mindestens drei Komponenten sowie ein Wasserzeichen aufweist, das durch Einfügen einer Wasserzeichenmarkierung an mindestens einem Punkt des Bildes erhalten wird, nach einer Einfügungsregel, welche jeweils für jede der besagten Komponenten die relative Position von drei dem mindestens einen Punkt zugeordneten Komponentenvektoren berücksichtigt.

**22.** Verfahren zum Erfassen eines Wasserzeichens eines damit markierten Bildes, ausgeführt nach dem Verfahren eines der Ansprüche 1 bis 18,
**dadurch gekennzeichnet, dass** es einen Schritt zum Wiedergewinnen eines Wasserzeichens (W) an mindestens einem Punkt (50) des Bildes umfasst, nach einer Wiedergewinnungsregel, welche jeweils für jede der besagten Komponenten die relative Position von drei dem mindestens einen Punkt zugeordneten Komponentenvektoren berücksichtigt.

**23.** Verfahren zum Erfassen eines Wasserzeichens nach Anspruch 22,
**dadurch gekennzeichnet, dass** der Schritt zum Wiedergewinnen einen Unterschritt zur paarweisen Berechnung der Abstände zwischen den drei Vektoren umfasst und dass die zwei Vektoren, die den größten Abstand untereinander aufweisen, Referenzvektoren (51, 52; 71, 72) sind, während es sich beim dritten, das Wasserzeichen tragenden Vektor, um den markierten Vektor (53; 73) handelt.

**24.** Verfahren zum Erfassen eines Wasserzeichens nach Anspruch 23,
**dadurch gekennzeichnet, dass**, wenn eine Grenze ($P_M$) zwischen den Referenzvektoren zwei Bereiche definiert, die den binären Werten "0" bzw. "1" zugeordnet sind, der Schritt zum Wiedergewinnen ebenfalls einen Unterschritt zum Kennzeichnen des Bereiches, in dem sich der markierte Vektor befindet, und einen Zuordnungsschritt eines entsprechenden Binärwertes umfasst.

**25.** Verfahren zum Erfassen eines Wasserzeichens nach einem der Ansprüche 22 bis 24,
**dadurch gekennzeichnet, dass** die Marke mindestens zweimal wieder gewonnen wird und, dass eine Korrelationsrechnung im Verhältnis zu einer Referenzsignatur (S) eingesetzt wird, um zu entscheiden, ob das Wasserzeichen korrekt erfasst wurde oder nicht.

**26.** Vorrichtung zum Erfassen eines Wasserzeichens in einem damit markierten Bild, ausgeführt nach dem Verfahren gemäß einem der Ansprüche 1 bis 18,
**dadurch gekennzeichnet, dass** sie über Mittel zum Wiedergewinnen eines Wasserzeichens an mindestens einem Punkt des Bildes verfügt, nach einer Wiedergewinnungsregel, welche jeweils für jede der besagten Komponenten die relative Position von drei dem mindestens einen Punkt zugeordneten Komponentenvektoren berücksichtigt.

**27.** EDV-Programm, welches auf einem in einem Rechner nutzbaren Datenträger gespeicherte Programmcode-Anweisungen zum Erfassen eines Wasserzeichens in einem damit markierten Bild umfasst, wobei das Programm nach dem Verfahren gemäß einem der Ansprüche 1 bis 18 verwirklicht wird,
**dadurch gekennzeichnet, dass** das Programm für einen Rechner lesbare Programmierungsmittel aufweist, um einen Schritt zum Wiedergewinnen einer Wasserzeichenmarkierung an mindestens einem Punkt des Bildes auszuführen, nach einer Wiedergewinnungsregel, welche jeweils für jede der besagten Komponenten die relative Position von drei dem mindestens einen Punkt zugeordneten Komponentenvektoren berücksichtigt.

## Fig. 1

$F$ : convolution avec le filtre $F$

$\downarrow x_2$ : sous-échantillonnage d'un facteur 2 suivant les colonnes

$\downarrow y_2$ : sous-échantillonnage d'un facteur 2 suivant les lignes

## Fig. 2

$A_{2^r}I$   34   31   p(x,y)   $D^1_{2^r}I$

$D^2_{2^r}I$   32

33   $D^3_{2^r}I$

$A_{2^{r+1}}I$   $D^1_{2^{r+1}}I$

2y

$D^2_{2^{r+1}}I$   2x   $D^3_{2^{r+1}}I$

$A_{2^{r+2}}I$

$D^1_{2^{r+2}}I$

4y

$D^2_{2^{r+2}}I$   4x   $D^3_{2^{r+2}}I$

## Fig. 3

40   signature

41   42

marque 1   Fig. 4   marque 2

$D^1_{2^1}I$

$D^2_{2^1}I$

$D^3_{2^1}I$

50

50

50

50

$\|\vec{V}_{R_2}\|$

$\|\vec{V}_M\|$

y

x

$D^2_{2^1}I(x_I, y_I)$

$\vec{V}_{R_2}$

52

$\vec{V}_M$

53

$D^3_{2^1}I(x_I, y_I)$

51

$\vec{V}_{R_1}$

$D^1_{2^1}I(x_I, y_I)$

## Fig. 5

$\vec{V}_{R_1}(x,y)$

si $W(x,y)=0$

73

71

$\vec{V}_M(x,y)$

si $W(x,y)=1$

72

$\vec{V}_{R_2}(x,y)$

## Fig. 7

Fig. 6a

Fig. 6b

Fig. 6c

Fig. 8a

Fig. 8b

Fig. 10

Fig. 9a

Fig. 9b

Fig. 9c